# EUROPÄISCHE PATENTSCHRIFT

(11) **EP 2 835 578 B1**
(45) Veröffentlichungstag und Bekanntmachung des Hinweises auf die Patenterteilung: **18.09.2019**
(21) Anmeldenummer: 14176241.9
(22) Anmeldetag: 09.07.2014
(51) Int. Cl.: F21V 8/00

(54) **Plattenförmiges Lichtleiterelement aus einem transparenten Material und Lichtmodul für eine Kraftfahrzeug-Beleuchtungseinrichtung mit einem solchen Lichtleiterelement**
Plate-shaped fibre optic element made of transparent material and light module for a motor vehicle illumination device with such a fibre optic element
Élément conducteur de lumière en forme de plaque en matériau transparent et module d'éclairage pour un dispositif d'éclairage de véhicule automobile doté d'un tel élément conducteur de lumière

(30) Priorität: 06.08.2013 DE 102013215471
(43) Veröffentlichungstag der Anmeldung: 11.02.2015
(73) Patentinhaber: Automotive Lighting Reutlingen GmbH, 72762 Reutlingen (DE)
(72) Erfinder: Kurt, Schuster, 72768 Reutlingen (DE); Pablo, Sanchez Bodega, 72810 Gomaringen (DE)
(74) Vertreter: DREISS Patentanwälte PartG mbB

(56) Entgegenhaltungen:
- EP-A2- 2 442 013
- US-A1- 2006 002 131
- US-A1- 2008 260 328
- US-A1- 2009 196 047

## Beschreibung

Die vorliegende Erfindung betrifft ein in einer Ebene erstreckendes, plattenförmiges Lichtleiterelement aus einem transparenten Material, wie bspw. Glas oder Kunststoff. Das Lichtleiterelement dient zum Umlenken des von mindestens einer Lichtquelle ausgesandten Lichts. Das Lichtleiterelement umfasst einen Einkoppelabschnitt zum Einkoppeln des Lichts, totalreflektierende äußere Grenzflächen und einen Auskoppelabschnitt zum Auskoppeln des Lichts. Dabei weist das plattenförmige Lichtleiterelement zwei zueinander beabstandete, gegenüberliegende Oberflächen, welche zumindest teilweise die totalreflektierenden Grenzflächen bilden, eine gebogene Seitenfläche, welche die Oberflächen entlang ihrer Kontur im Bereich des gebogenen Kurvenabschnitts verbindet, und eine im Wesentlichen ebene Seitenfläche auf, welche die Oberflächen entlang ihrer Kontur im Bereich des Sekantenabschnitts miteinander verbindet. Eine Kontur der gegenüberliegenden Oberflächen ist in der Erstreckungsebene des Lichtleiterelements jeweils einerseits durch einen gebogenen Kurvenabschnitt und andererseits durch einen Sekantenabschnitt definiert. Der gebogene Kurvenabschnitt kann ein Parabelabschnitt, ein parabelähnlicher Kurvenabschnitt oder ein Kreisbogenabschnitt sein. Der Einkoppelabschnitt ist durch die im Wesentlichen ebene Seitenfläche und der Auskoppelabschnitt durch die gebogene Seitenfläche gebildet.

Die Erfindung betrifft außerdem ein Lichtmodul für eine Kraftfahrzeug-Beleuchtungseinrichtung zur Erzeugung mindestens einer vorgegebenen Lichtverteilung. Das Lichtmodul umfasst mindestens eine Lichtquelle und mindestens ein plattenförmiges Lichtleiterelement zum Umlenken des von der Lichtquelle ausgesandten Lichts.

Ein plattenförmiges Lichtleiterelement und ein Lichtmodul der genannten Art sind bspw. aus der EP 2 442 013 A2 bekannt. Als problematisch hat sich dabei die Einkopplung des von der mindestens einen Lichtquelle ausgesandten Lichts über den Einkoppelabschnitt in das Lichtleiterelement erwiesen.

Ferner ist aus der US 2008/260328 A1 und der US 2006/002131 A1 jeweils ein Lichtleiterelement bekannt, bei dem einem Einkoppelabschnitt eine bezüglich der ebenen Seitenfläche des Lichtleiterelements schräg stehende Reflexionsfläche zugeordnet ist, die zumindest einen Teil des von einer Lichtquelle ausgesandten Lichts zur Einkopplung in das Lichtleiterelement auf die ebene Seitenfläche lenkt.

Der vorliegenden Erfindung liegt die Aufgabe zugrunde, ein Lichtleiterelement und ein Lichtmodul der eingangs genannten Art dahingehend auszugestalten und weiterzubilden, dass eine besonders effiziente Einkopplung des von mindestens einer Lichtquelle ausgesandten Lichts in das Lichtleiterelement erzielt werden kann.

Zur Lösung dieser Aufgabe wird ausgehend von dem Lichtleiterelement der eingangs genannten Art vorgeschlagen, dass dem Einkoppelabschnitt des Lichtleiterelements mindestens eine bezüglich der im Wesentlichen ebenen Seitenfläche des Lichtleiterelements zumindest abschnittsweise schräg stehende Reflexionsfläche zugeordnet ist, welche zumindest einen Teil des von der mindestens einen Lichtquelle ausgesandten Lichts zur Einkopplung in das Lichtleiterelement auf die im Wesentlichen ebene Seitenfläche lenkt, wobei die Reflexionsfläche eine Form aufweist, die sich nach einer Rotation einer Basiskurve ergibt und ein räumliches Bezugssystem durch drei jeweils senkrecht aufeinander stehende x-, y- und z-Achsen definiert ist, wobei eine Oberfläche des Lichtleiterelements in einer durch die x- und y-Achsen aufgespannten x-/y-Ebene liegt, wobei die im Wesentlichen ebene Seitenfläche des Einkoppelabschnitts des Lichtleiterelements entlang der y-Achse verläuft und eine x-/z-Ebene die im Wesentlichen ebene Seitenfläche in zwei im Wesentlichen gleich große Teilflächen unterteilt und wobei der Abstand zwischen den beiden gegenüberliegenden Oberflächen ausgehend von dem Auskoppelabschnitt zum Ursprung des Bezugssystem hin abnimmt, und dass sich die Form einer Reflexionsfläche ergibt, wenn von der Basiskurve, die mit ihrem Brennpunkt im Ursprung des Bezugssystems in der x-/y-Ebene liegt, nur der Teil für negative x-Werte und negative y-Werte um etwa 90° um die y-Achse rotiert und in Richtung der im Wesentlichen ebenen Seitenfläche des Lichtleiterelements umklappt.

Auf diese Weise kann sichergestellt werden, dass ein Großteil des von der Lichtquelle ausgesandten Lichts auch tatsächlich über den Einkoppelabschnitt in das Lichtleiterelement eingekoppelt wird. Durch eine geeignete Form der mindestens einen Reflexionsfläche kann eine gezielte Umlenkung des von der Lichtquelle ausgesandten Lichts auf den Einkoppelabschnitt und sogar eine Bündelung oder sonstige Variation des von der Lichtquelle ausgesandten Lichts erfolgen. Dadurch kann eine besonders hohe Effizienz des Lichtleiterelements bzw. des gesamten Lichtmoduls erreicht werden.

Diese Basiskurve kann gemäß einer bevorzugten Ausführungsform als eine Parabel oder eine parabelähnliche Kurve ausgebildet sein. Vorteilhafterweise wird als parabelähnliche Kurve eine mit Termen höherer Ordnung modifizierte Parabel bezeichnet.

Es wird vorgeschlagen, ein räumliches Bezugssystem durch drei jeweils senkrecht aufeinander stehende x-, y- und z-Achsen zu definieren. Eine Grundfläche des Lichtleiterelements liegt in einer durch die x- und y-Achsen aufgespannten x-/y-Ebene. Das plattenförmige Lichtleiterelement erstreckt sich also in der x-/y-Ebene. Die im Wesentlichen ebene Seitenfläche (der Einkoppelabschnitt) des Lichtleiterelements verläuft entlang der y-Achse. Eine senkrecht auf der Erstreckungsebene des Lichtleiterelements stehende x-/z-Ebene unterteilt die im Wesentlichen ebene Seitenfläche in zwei im Wesentlichen gleich große Teilflächen. Ganz besonders bevorzugt ist es, wenn sich unter diesen Vorgaben die Form einer dem Einkoppelabschnitt zugeordneten Reflexionsfläche ergibt, wenn von der Basiskurve, die mit ihrem Brennpunkt im Ursprung des Bezugssystems in der x-/y-Ebene liegt, nur der Teil für negative x-Werte und positive y-Werte um etwa 90° um die y-Achse rotiert und in Richtung der im Wesentlichen ebenen Seitenfläche des Lichtleiterelements, d.h. in die y-/z-Ebene, hochklappt. Somit hat die mindestens eine Reflexionsfläche die Form eines definierten Rotationsparaboloids oder eine einem Rotationsparaboloid ähnliche Form, die sich aus der Rotation einer parabelähnlichen Kurve ergibt. Die mindestens eine Lichtquelle ist vorzugsweise in dem Brennpunkt der auf diese Weise ausgebildeten mindestens einen Reflexionsfläche angeordnet. Dadurch wird erreicht, dass nahezu alle von der Lichtquelle ausgesandten und auf eine Reflexionsfläche treffenden Lichtstrahlen parallel in das Lichtleiterelement eingekoppelt werden.

Besonders bevorzugt ist, wenn dem Einkoppelabschnitt mindestens ein aus einem transparenten Material gefertigtes Einkoppelelement zugeordnet ist. In diesem Fall kann dann die Reflexionsfläche von einer totalreflektierenden Grenzfläche des mindestens einen Einkoppelelements gebildet sein. Das mindestens eine Einkoppelelement kann separat von dem Lichtleiterelement oder aber als integrale Einheit einstückig mit diesem ausgebildet sein. Das Einkoppelelement wird vorzugsweise durch die Rotation einer Basiskurve, bspw. einer Parabel oder einer parabelähnlichen Kurve, um etwa 90° auf die oben beschriebene Weise erzeugt. Damit weist das Einkoppelelement zwei in einem Winkel von etwa 90° stehende im Wesentlichen ebene Flächen auf, von denen eine als Lichteintrittsfläche für das von der Lichtquelle ausgesandte Licht und die andere als Lichtaustrittsfläche des umgelenkten Lichts dient. Das aus der Lichtaustrittsfläche des Einkoppelelements austretende Licht tritt entweder unmittelbar oder mittelbar, bspw. über einen Luftspalt, in die im Wesentlichen ebene Seitenfläche des Einkoppelabschnitts des Lichtleiterelements ein.

Gemäß einer bevorzugten Ausführungsform der vorliegenden Erfindung weist das Lichtleiterelement zwei dem Einkoppelabschnitt zugeordnete Einkoppelelemente auf. In diesem Sinne wird vorgeschlagen, dass ein räumliches Bezugssystem durch drei jeweils senkrecht aufeinander stehende x-, y- und z-Achsen definiert ist. Eine Grundfläche des Lichtleiterelements liegt in einer durch die x- und y-Achsen aufgespannten x-/y-Ebene. Die im Wesentlichen ebene Seitenfläche des Lichtleiterelements, die den Einkoppelabschnitt bildet, verläuft entlang der y-Achse und eine x-/z-Ebene unterteilt die im Wesentlichen ebene Seitenfläche in zwei im Wesentlichen gleich große Teilflächen. Dem Einkoppelabschnitt sind zwei bezüglich der x-/z-Ebene spiegelbildlich ausgebildete Einkoppelelemente zugeordnet. Die Brennpunkte der beiden Einkoppelelemente sind vorzugsweise deckungsgleich, so dass mindestens eine Lichtquelle in dem gemeinsamen Brennpunkt der beiden Einkoppelelemente bzw. der totalreflektierenden Grenzflächen der beiden Einkoppelelemente angeordnet werden kann. Die beiden Einkoppelelemente können als ein gemeinsames integrales Bauteil oder separat voneinander ausgestaltet sein. Ebenso können die Einkoppelelemente separat von dem Lichtleiterelement oder aber als integrale Einheit einstückig mit diesem ausgebildet sein.

Das Lichtleiterelement hat vorzugsweise eine im Wesentlichen Ebene Oberfläche, die vorzugsweise auf der x-/y-Ebene liegt, sowie eine zu dieser beabstandete gegenüberliegende Oberfläche. Die Form dieser Oberfläche des Lichtleiterelements ergibt sich vorteilhafterweise dadurch, dass die um die y-Achse rotierte und in Richtung der im Wesentlichen ebenen Seitenfläche des Lichtleiterelements, d.h. in die y-/z-Ebene, hochgeklappte Basiskurve um etwa 180° um die z-Achse rotiert. In diesem Fall hat die gebogene Seitenfläche des Auskoppelabschnitts des Lichtleiterelements die Form eines Abschnitts eines Zylindermantels mit kreisförmiger Grundfläche.

Das Erfindungsgemäße Lichtleiterelement kann besonders bevorzugt in einem Lichtmodul für eine Kraftfahrzeug-Beleuchtungseinrichtung zur Erzeugung mindestens einer vorgegebenen Lichtverteilung eingesetzt werden. Das Lichtmodul umfasst mindestens eine Lichtquelle und mindestens ein erfindungsgemäßes Lichtleiterelement zum Umlenken des von der Lichtquelle ausgesandten Lichts, so dass es zur Erzeugung der mindestens einen vorgegebenen Lichtverteilung genutzt werden kann. Das umgelenkte Licht kann entweder unmittelbar oder mittelbar, bspw. nach dem Durchtritt durch eine Sekundäroptik oder eines anderen optisch wirksamen Elements oder nach dem Passieren einer Blendenanordnung, zur Erzeugung der Lichtverteilung genutzt werden.
Insbesondere kann das Lichtmodul Bestandteil eines Kraftfahrzeugscheinwerfers oder einer beliebigen Fahrzeugleuchte sein. Wenn das Lichtmodul Teil eines Scheinwerfers ist, könnte es bspw. zur Erzeugung einer beliebigen Scheinwerferfunktion (z.B. Abblendlicht, Fernlicht, Nebellicht, statisches oder dynamisches Kurvenlicht, Teilfernlicht, Markierungslicht, Stadtlicht, Landstraßenlicht, Autobahnlicht, Schlechtwetterlicht, etc.) oder einer beliebigen Leuchtenfunktion (z.B. Positionslicht, Standlicht, Blinklicht, Tagfahrlicht, etc.) genutzt werden. Wenn das Lichtmodul Teil einer Rückleuchte ist, könnte es bspw. zur Erzeugung einer beliebigen Leuchtenfunktion (z.B. Rücklicht, Bremslicht, Blinklicht, Nebelrückstrahler, Rückfahrscheinwerfer, etc.) genutzt werden. Selbstverständlich müssen die Lichtquellen zur Realisierung der entsprechenden Scheinwerfer- oder Leuchtenfunktion Licht in der entsprechenden, in der Regel gesetzlich vorgeschriebenen Farbe aussenden. Alternativ könnte auch das Lichtleiterelement oder das entsprechende Einkoppelelement eingefärbt sein, so dass sich Licht in der gewünschten Farbe ergibt.

Gemäß einer vorteilhaften Weiterbildung des erfindungsgemäßen Lichtmoduls umfasst das Lichtmodul ferner ein dem Auskoppelabschnitt des Lichtleiterelements zugeordnetes Reflexionselement, welches zumindest einen Teil des ausgekoppelten Lichts zur Erzeugung mindestens einer gewünschten Lichtverteilung des Lichtmoduls umlenkt. Dieses Reflexionselement weist mindestens eine Reflexionsfläche auf, die vorzugsweise schräg zu der den Auskoppelabschnitt bildenden gebogenen Seitenfläche des Lichtleiterelements bzw. zu den über den Auskoppelabschnitt aus dem Lichtleiterelement ausgekoppelten Lichtstrahlen steht, um das aus dem Lichtleiterelement ausgekoppelte Licht in eine andere Richtung, vorzugsweise in einem Winkel von etwa 90°, umlenken zu können. Vorzugsweise ergibt sich die Grundform der Reflexionsfläche durch Schwenken mindestens eines in der x-/z-Ebene verlaufenden Geradenabschnitts, eines Parabelabschnitts oder eines beliebig anderen Kurvenabschnitts um die z-Achse. Der um die z-Achse zu verschwenkende Kurvenabschnitt kann auch aus mehreren Teilabschnitten zusammengesetzt sein. So ist es bspw. denkbar, dass der Kurvenabschnitt im unteren Bereich ein Geradenabschnitt ist, der dann nach oben in einen Parabelabschnitt übergeht bzw. umgekehrt im unteren Bereich ein Parabelabschnitt ist, der dann nach oben in einen Geradenabschnitt übergeht. Beliebig andere Kombinationen einer beliebiger Anzahl verschiedener Kurvenabschnitte sind ebenfalls denkbar.

Gemäß einer bevorzugten Ausführungsform der vorliegenden Erfindung wird vorgeschlagen, dass das Reflexionselement als ein Spiegelreflektor oder als ein Reflexionskörper aus einem transparenten Material ausgebildet ist. Im Falle eines Spiegelreflektors wird die Reflexionsfläche durch eine herkömmliche Spiegelfläche gebildet. Im Falle eines transparenten Reflexionskörpers wird die Reflexionsfläche durch eine Grenzfläche des Körpers gebildet, an der eingekoppelte Lichtstrahlen totalreflektiert werden. Auf der Reflexionsfläche können zumindest bereichsweise optisch wirksame Elemente zur Streuung oder anderweitigen Beeinflussung der reflektierten Lichtstrahlen angeordnet sein. Ebenso ist es denkbar, im Falle eines Reflexionselements in Form eines transparenten Reflexionskörpers auf einer Lichtaustrittsfläche des Reflexionskörpers zumindest bereichsweise optisch wirksame Elemente zur Streuung oder anderweitigen Beeinflussung der reflektierten Lichtstrahlen anzuordnen. Die optisch wirksamen Elemente können Prismen, Zylinderlinsen, Kissenoptiken, Facetten, eine Mikrostruktur o.ä. umfassen.

Besonders bevorzugt ist, wenn sich eine Reflexionsfläche des Reflexionselements in einem Abstand, vorzugsweise in einem konstanten Abstand, zu der gebogenen Seitenfläche des Auskoppelabschnitts des Lichtleiterelements erstreckt. Im Falle eines Reflexionselements in Form eines Spiegelreflektors wäre dieser Spiegel beabstandet zu der gebogenen Seitenfläche des Auskoppelabschnitts des Lichtleiterelements angeordnet und hätte in der x-/y-Ebene betrachtet die gleiche Form wie die gebogene Seitenfläche, bspw. eine Kreisbogenform. Im Falle eines transparenten Reflexionskörpers könnte eine Lichteintrittsfläche des Reflexionskörpers unmittelbar an die gebogene Seitenfläche des Auskoppelabschnitts des Lichtleiterelements angrenzen. Es wäre in diesem Fall sogar denkbar, dass der Reflexionskörper und das Lichtleiterelement als ein integrales Bauteil einstückig ausgebildet sind. Ebenso möglich wäre ein Abstand zwischen dem Auskoppelabschnitt des Lichtleiterelements und der Lichteintrittsfläche des Reflexionskörpers.

Vorteilhafterweise verläuft eine Hauptabstrahlrichtung der mindestens einen Lichtquelle in etwa parallel zu der im Wesentlichen ebenen Seitenfläche des Einkoppelabschnitts. Ein von der mindestens einen Lichtquelle in Hauptabstrahlrichtung ausgesandter Mittelpunktsstrahl wird durch die dem Einkoppelabschnitt zugeordnete schräg stehende Reflexionsfläche bzw. das mindestens eine Einkoppelelement um etwa 90° umgelenkt, so dass er in etwa senkrecht auf die im Wesentlichen Ebene Seitenfläche des Einkoppelabschnitts des Lichtleiterelements trifft und in dieses eingekoppelt wird. Vorzugsweise hat die dem Einkoppelabschnitt des Lichtleiterelements zugeordnete schräg stehende Reflexionsfläche auf einer Seite einen größeren Abstand zu der im Wesentlichen ebenen Seitenfläche des Einkoppelabschnitts als auf einer anderen Seite. Die mindestens eine Lichtquelle ist vorzugsweise auf der Seite des Lichtleiterelements angeordnet, auf der die Reflexionsfläche den größeren Abstand zu der im Wesentlichen ebenen Seitenfläche aufweist.

Die mindestens eine Lichtquelle weist vorteilhafterweise mindestens eine Halbleiterlichtquelle, insbesondere mindestens eine Leuchtdiode (LED), auf. Die LED ist vorzugsweise auf einem starren Schaltungsträger angeordnet, auf dem auch mehrere LEDs angeordnet sein können. Auf dem Schaltungsträger können auch elektronische Bauelemente zur Ansteuerung der LED angeordnet sein. Der Schaltungsträger kann beidseitig bestückt sein. Die Lichtquelle kann auch eine LED-Matrix mit mehreren neben- und/oder übereinander angeordneten LEDs aufweisen. Eine LED sendet üblicherweise Licht in einen 180°-Halbraum aus. Die LED wird bezüglich der dem Einkoppelabschnitt zugeordneten mindestens einen Reflexionsfläche derart angeordnet, dass ein möglichst großer Anteil des von der LED ausgesandten Lichts auf die Reflexionsfläche(n) trifft und in das Lichtleiterelement eingekoppelt wird. Wenn das Einkoppelelement als ein transparenter Körper mit einer rotationsparabelförmigen oder rotationsparabelähnlichen Reflexionsfläche ausgebildet ist, ist die LED vorzugsweise im Brennpunkt der Rotationsparabel oder der rotationsparabelähnlichen Fläche angeordnet. Eine LED bzw. ihre Lichtaustrittsfläche hat üblicherweise eine rechteckige Form. Die Seitenflächen verlaufen vorzugsweise parallel zu den x-/y-Achse eines definierten und oben bereits ausführlich erläuterten Bezugssystems, in dem das Lichtleiterelement in der beschriebenen Weise liegt. Wenn eine Anordnung der LED direkt an der Einkoppelstelle des Lichtleiterelements nicht möglich ist, kann das Licht zunächst in einen stabförmigen Lichtleiter eingekoppelt werden, der das Licht an die Lichteinkoppelstelle leitet, so dass das Ende des Lichtleiter die Funktion der Lichtquelle übernimmt.

Gemäß einer anderen vorteilhaften Weiterbildung der vorliegenden Erfindung weist das Lichtmodul zwei erfindungsgemäße Lichtleiterelemente auf, die mit einander zugewandten und zueinander beabstandeten Einkoppelabschnitten in der x-/y-Ebene angeordnet sind. Die y-/z-Ebene liegt in etwa in der Mitte zwischen den beiden Einkoppelabschnitten. Das Lichtmodul weist außerdem zwei Lichtquellen auf, die in der x-/y-Ebene oder einer dazu parallelen Ebene betrachtet jeweils in einem Abstand zu der y-/z-Ebene auf der gleichen Seite des Lichtleiterelements angeordnet sind.

Auch bei dieser Weiterbildung mit zwei erfindungsgemäßen Lichtleiterelementen sind den Einkoppelabschnitten der Lichtleiterelemente die schräg stehenden Reflexionsflächen bzw. die Einkoppelelemente mit den totalreflektierenden Grenzflächen zugeordnet. Wenn den Einkoppelabschnitten jeweils zwei Einkoppelelemente zugeordnet sind, ist mindestens eine Lichtquelle in einem gemeinsamen Brennpunkt der beiden Einkoppelelemente angeordnet. Es ist klar, dass bei Verwendung mehrerer Lichtquellen pro Lichtleiterelement nicht alle Lichtquellen genau in dem Brennpunkt angeordnet sein können. Bei Verwendung einer als Leuchtdiode ausgestalten Lichtquelle ist der Mittelpunkt der Licht emittierenden Fläche vorzugsweise im Brennpunkt angeordnet. Bei Verwendung von zwei oder mehr Leuchtdioden sind diese vorzugsweise so angeordnet, dass der gemeinsame Brennpunkt der Einkoppelelemente bzw. der totalreflektierenden Grenzflächen der Einkoppelelemente an einer Kante oder Ecke der Licht emittierenden Fläche der Leuchtdioden angeordnet. Alternativ kann der gemeinsame Brennpunkt auch auf dem Flächenschwerpunkt der Licht emittierenden Flächen der Leuchtdioden angeordnet sein.

Auch bei dieser Weiterbildung ist den Auskoppelabschnitten der Lichtleiterelemente mindestens ein Reflexionselement zugeordnet. Die in der x-/y-Ebene oder einer dazu parallelen Ebene betrachtet kreisbogenförmigen Reflexionsflächen der Reflexionselemente werden im Bereich der Einkoppelelemente durch gerade Reflexionsflächen miteinander verbunden. Insgesamt ergibt sich dadurch in der x-/y-Ebene oder einer dazu parallelen Ebene betrachtet ein ovales Lichtmodul, das über seinen gesamten äußeren Rand von einem Reflexionselement umgeben ist. Selbstverständlich kann auf die geraden Reflexionsflächen zwischen den kreisbogenförmigen Reflexionsflächen auch verzichtet werden.

Gemäß noch einer anderen vorteilhaften Weiterbildung der vorliegenden Erfindung weist das Lichtmodul vier erfindungsgemäße Lichtleiterelemente auf. Im Grunde genommen besteht ein solches Lichtmodul aus zwei aufeinander gelegten zuvor beschriebenen Lichtmodulen mit je zwei erfindungsgemäßen Lichtleiterelementen (sog. Lichtleiterelementepaare). Die Lichtleiterelementepaare werden mit den ebenen Oberflächen der Lichtleiterelemente nach außen gerichtet aufeinander gelegt. Dabei benutzten die beiden Lichtleiterelementepaare gemäß der vorliegenden Weiterbildung vorzugsweise die gleichen, den Lichtauskoppelabschnitten der Lichtleiterelemente zugeordnete Reflexionselemente zum Umlenken der aus den Lichtleiterelementen ausgekoppelten Lichtstrahlen. Insbesondere wird vorgeschlagen, dass jeweils zwei Lichtleiterelemente mit einander zugewandten und zueinander beabstandeten Einkoppelabschnitten (ein erstes Lichtleiterelementepaar) oberhalb der x-/y-Ebene und jeweils zwei weitere Lichtleiterelemente mit einander zugewandten und zueinander beabstandeten Einkoppelabschnitten (ein weiteres Lichtleiterelementepaar) unterhalb der x-/y-Ebene angeordnet sind, wobei jeweils zwei in einer gemeinsamen Ebene angeordneten Lichtleiterelemente ein Lichtleiterelementepaar bilden. Die x-/y-Ebene verläuft zwischen den beiden Lichtleiterelementepaaren, und die y-/z-Ebene verläuft in etwa in der Mitte zwischen den beiden Einkoppelabschnitten eines Lichtleiterelementepaars. Das Lichtmodul weist vier Lichtquellen auf, die in der x-/y-Ebene oder einer dazu parallelen Ebene betrachtet jeweils in einem Abstand zu der y-/z-Ebene und von denen in der y-/z-Ebene oder einer dazu parallelen Ebene betrachtet jeweils zwei in einem Abstand zu der x-/y-Ebene angeordnet sind. Insbesondere sind die Lichtquellen in den Brennpunkten der ihnen jeweils zugeordneten Einkoppelelemente angeordnet. Selbstverständlich können in den einzelnen Brennpunkten auch mehr als jeweils eine Lichtquelle angeordnet werden.

Bei Verwendung von mehreren Lichtquellen in einem Lichtmodul dient das von den verschiedenen Lichtquellen ausgesandte Licht vorzugsweise zur Erzeugung von unterschiedlichen Lichtverteilungen. Insbesondere senden zumindest zwei der Lichtquellen Licht unterschiedlicher Farben aus.

Weitere Merkmale und Vorteile der vorliegenden Erfindung werden nachfolgend unter Bezugnahme auf die beiliegenden Figuren näher erläutert. Es zeigen:
- Figur 1: ein erfindungsgemäßes Lichtleiterelement gemäß einer bevorzugten Ausführungsform in perspektivischer Ansicht;
- **Figur 2**: **ein erstes Teil des erfindungsgemäßen Lichtleiterelements aus** **Figur 1****;**
- Figur 3: ein zweites Teil des erfindungsgemäßen Lichtleiterelements aus Figur 1;
- **Figur 4**: **ein erfindungsgemäßes Lichtmodul gemäß einer bevorzugten Ausführungsform in perspektivischer Ansicht;**
- **Figur 5**: **eine Draufsicht in der x-/y-Ebene auf das Lichtmodul aus** **Figur 4****;**
- **Figur 6**: **eine Schnittansicht in der y-/z-Ebene des Lichtmoduls aus** **Figur 4****;**
- **Figur 7**: **eine Schnittansicht in der x-/z-Ebene durch das Lichtmodul aus** **Figur 4****;**
- Figur 8: ein Ausführungsbeispiel eines dem Lichtauskoppelabschnitt des Lichtleiterelements aus Figur 1 zugeordnetes TIR-Reflexionselement;
- **Figur 9**: **ein weiteres Ausführungsbeispiel eines dem Lichtauskoppelabschnitt des Lichtleiterelements aus** **Figur 1** **zugeordneten TIR-Reflexionselements;**
- Figur 10: ein erfindungsgemäßes Lichtmodul mit einem TIR-Reflexionselement aus Figur 9 in perspektivischer Ansicht gemäß einer bevorzugten Ausführungsform;
- Figur 11: eine Draufsicht in der x-/y-Ebene auf das Lichtmodul aus Figur 10;
- **Figur 12**: **eine Schnittansicht in der y-/z-Ebene durch das Lichtmodul aus** **Figur 10****;**
- Figur 13: eine Schnittansicht in der x-/z-Ebene durch das Lichtmodul gemäß Figur 10;
- Figur 14: ein erfindungsgemäßes Lichtmodul gemäß einer bevorzugten Ausführungsform in Abwandlung des Lichtmoduls aus Figur 4;
- Figur 15: ein erfindungsgemäßes Lichtmodul gemäß einer bevorzugten Ausführungsform in Abwandlung des Lichtmoduls aus Figur 10;
- Figur 16: ein erfindungsgemäßes Lichtmodul in perspektivischer Ansicht gemäß einer bevorzugten Ausführungsform;
- **Figur 17**: **eine Draufsicht in der x-/y-Ebene auf das Lichtmodul aus** **Figur 16****;**
- **Figur 18**: **eine Schnittansicht in der y-/z-Ebene durch das Lichtmodul aus** **Figur 16****;**
- **Figur 19**: **eine Schnittansicht in der x-/z-Ebene durch das Lichtmodul aus** **Figur 16****;**
- Figur 20: ein erfindungsgemäßes Lichtmodul in perspektivischer Ansicht gemäß einer bevorzugten Ausführungsform;
- **Figur 21**: **eine Draufsicht in der x-/y-Ebene auf das Lichtmodul aus** **Figur 20****;**
- **Figur 22**: **eine Schnittansicht in der y-/z-Ebene durch das Lichtmodul aus** **Figur 20****;**
- **Figur 23**: **eine Schnittansicht in der x-/z-Ebene durch das Lichtmodul aus** **Figur 20****;**
- Figur 24: ein erfindungsgemäßes Lichtmodul in perspektivischer Ansicht gemäß einer bevorzugten Ausführungsform;
- **Figur 25**: **eine Draufsicht in der x-/y-Ebene auf das Lichtmodul aus** **Figur 24****;**
- **Figur 26**: **eine Schnittansicht in der y-/z-Ebene durch das Lichtmodul aus** **Figur 24****;**
- **Figur 27**: **eine Schnittansicht in der x-/z-Ebene durch das Lichtmodul aus** **Figur 24****;**
- Figur 28: ein erfindungsgemäßes Lichtmodul in perspektivischer Ansicht gemäß einer bevorzugten Ausführungsform;
- **Figur 29**: **eine Draufsicht in der x-/y-Ebene auf das Lichtmodul aus** **Figur 28****;**
- **Figur 30**: **eine Schnittansicht in der y-/z-Ebene durch das Lichtmodul aus** **Figur 28****; und**
- **Figur 31**: **eine Schnittansicht in der x-/z-Ebene durch das Lichtmodul aus** **Figur 28****.**

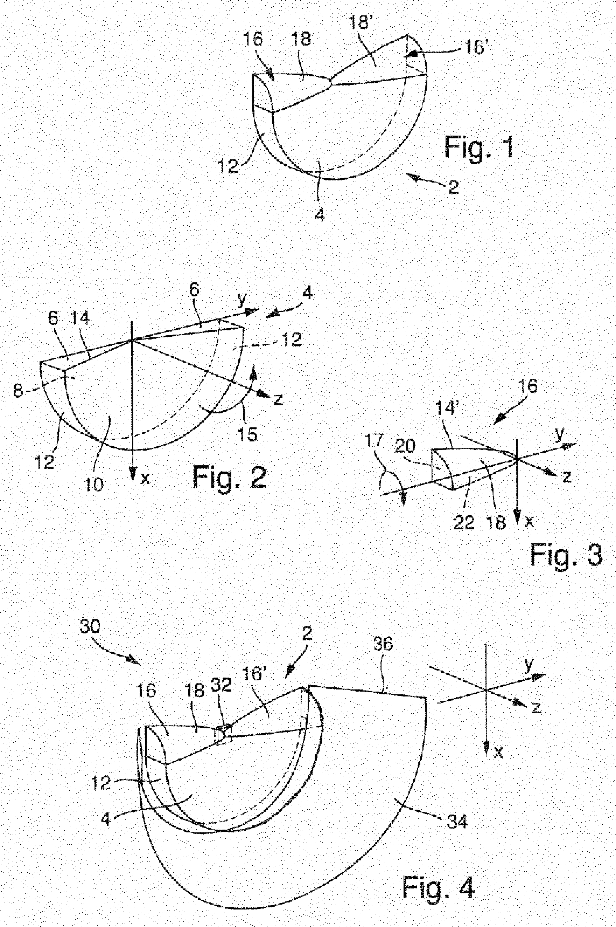

In Figur 1 ist ein erfindungsgemäßes plattenförmiges Lichtleiterelement in seiner Gesamtheit mit dem Bezugszeichen 2 bezeichnet. Das Lichtleiterelement 2 besteht aus einem transparenten Glas- oder Kunststoffmaterial und dient insbesondere dazu, von einer Lichtquelle ausgesandtes Licht zu bündeln. Das Lichtleiterelement 2 umfasst im Wesentlichen zwei Teile. Ein erstes Teil, das in Figur 2 gesondert dargestellt ist, ist ein Lichtleitkörper 4. Dieser umfasst einen Einkoppelabschnitt 6 zum Einkoppeln des von mindestens einer Lichtquelle ausgesandten Lichts. Außerdem umfasst der Lichtleitkörper 4 einander gegenüberliegende und zueinander beabstandete Oberflächen 8, 10, die als total reflektierende äußere Grenzflächen des Lichtleitkörpers 4 dienen. Schließlich umfasst der Lichtleitkörper 4 einen Auskoppelabschnitt 12 zum Auskoppeln des eingekoppelten Lichts aus dem Lichtleitkörper 4. Die Oberflächen 8, 10 weisen in der Erstreckungsebene (x-/y-Ebene) des Lichtleiterelements 2 eine Kontur auf, die einerseits durch einen gebogenen Kurvenabschnitt (gebildet durch den Auskoppelabschnitt 12) und andererseits durch einen Sekantenabschnitt (gebildet durch den Einkoppelabschnitt 6) definiert ist.

Die Oberfläche 8 des Lichtleitkörpers 4 ist vorzugsweise im Wesentlichen eben ausgestaltet. Der Abstand zwischen den beiden gegenüberliegenden Oberflächen 8, 10 nimmt ausgehend von dem Auskoppelabschnitt 12 zum Ursprung eines durch drei x-, y-, z-Achsen definierten Bezugssystems hin ab. Der abnehmende Abstand ist in Figur 2 an dem in der y-/z-Ebene liegenden Einkoppelabschnitt 6 zu erkennen, der einem Schnitt durch den Lichtleitkörper 4 in der y-/z-Ebene entspricht. In dem dargestellten Ausführungsbeispiel ergibt sich für den Auskoppelabschnitt 12 eine kreisbogenförmige Fläche. Die gebogene Seitenfläche des Auskoppelabschnitts 12 steht vorzugsweise senkrecht auf der x-/y-Ebene.

Die Form des Lichtleitkörpers 4 kann beispielsweise folgendermaßen erzeugt werden: Es wird ausgegangen von einer Basiskurve 14, die beispielsweise eine Parabel, eine parabelähnliche Kurve oder Ähnliches sein kann. Unter einer parabelähnlichen Kurve wird eine durch Terme höherer Ordnung modifizierte Parabel verstanden. Die Basiskurve 14 liegt in der y-/z-Ebene. Der Brennpunkt der Basiskurve 14 liegt vorzugsweise im Ursprung des x-, y-, z-Bezugssystems. Der Teil der Bezugskurve 14, der in dem Quadranten der y-/z-Ebene für negative y-Werte und positive z-Werte liegt, wird dann um etwa 180 Grad entgegen dem Uhrzeigersinn um die z-Achse rotiert. Die Drehung um die z-Achse ist durch den Pfeil 15 veranschaulicht. Das Volumen des Lichtleitkörpers 4 ergibt sich dabei durch die um die z-Achse rotierende Fläche, die zwischen der Basiskurve 14 und dem negativen Teil der y-Achse aufgespannt wird.

Außer dem Lichtleitkörper 4 umfasst das erfindungsgemäße Lichtleiterelement 2 mindestens ein Einkoppelelement 16, das im Detail in Figur 3 dargestellt ist. In dem dargestellten Ausführungsbeispiel der Figur 1 umfasst das Lichtleiterelement 2 zwei Lichteinkoppelelemente 16, die spiegelsymmetrisch zur x-/z-Ebene ausgebildet sind. die beiden Einkoppelelemente 16 können als separate Teile oder aber als eine integrale Einheit einstückig ausgebildet sein. Die Grundform eines Einkoppelelements 16 erhält man dadurch, dass man von einer Basiskurve 14' ausgeht, die beispielsweise eine Parabel, eine parabelähnliche Kurve oder eine beliebig andere Kurve ist. Die Basiskurve 14' liegt in der x-/y-Ebene und ist derart in dem x-, y-, z-Bezugssystem angeordnet, dass ein Brennpunkt der Basiskurve 14' im Ursprung des Bezugssystems liegt. Der Teil der Kurve 14' für negative x-Werte und negative y-Werte wird um etwa 90° im Uhrzeigersinn um die y-Achse gedreht. Die Drehung ist durch einen Pfeil 17 veranschaulicht. Auf diese Weise erhält man ein Einkoppelelement 16 mit einer Reflexionsfläche 18, welche die Form eines Rotationsparaboloidabschnitts aufweist, mit einer zumindest näherungsweise in der x-/y-Ebene angeordneten Lichteintrittsfläche 20 sowie einer näherungsweise in der y-/z-Ebene angeordneten Lichtaustrittsfläche 22. Das rechte Einkoppelelement 16' des Lichtleiterelements 2 (vgl. Figur 1) ergibt sich in entsprechender Weise, insbesondere durch Spiegeln des Einkoppelelements 16 an der x-/z-Ebene. Die Brennpunkte der beiden Einkoppelelemente 16, 16' des in Figur 1 gezeigten Lichtleiterelements 2 sind vorzugsweise deckungsgleich. Die beiden Einkoppelelemente 16 weisen somit einen gemeinsamen Brennpunkt auf.

Sowohl die Lichteintrittsfläche 20 als auch die Lichtaustrittsfläche 22 sind in Figur 3 von dem Einkoppelelement 16 verdeckt. Die Lichteintrittsfläche 20 verläuft im Wesentlichen senkrecht zu der Lichtaustrittsfläche 22. Vorzugsweise wird zum Generieren des Einkoppelelements 16 die gleiche Basiskurve 14' verwendet wie die Basiskurve 14 zum Generieren des Lichtleitkörpers 4, um einen bündigen Übergang zwischen dem Einkoppelelement 16 und dem Einkoppelabschnitt 6 des Lichtleitkörpers 4 im Bereich der Lichtaustrittsfläche 22 des Einkoppelelements 16 zu erzielen.

Das erfindungsgemäße plattenförmige Lichtleiterelement 2 hat den Vorteil, dass es gegenüber herkömmlichen plattenförmigen Lichtleiterelementen eine besonders effiziente Einkopplung des von mindestens einer Lichtquelle ausgesandten Lichts und eine gleichmäßige Verteilung des eingekoppelten Lichts über den gesamten Auskoppelabschnitt 12 ermöglicht.

In Figur 4 ist ein erfindungsgemäßes Lichtmodul gemäß einer bevorzugten Ausführungsform dargestellt und in seiner Gesamtheit mit dem Bezugszeichen 30 bezeichnet. Das Lichtmodul 30 wird beispielsweise in einer Kraftfahrzeug-Beleuchtungseinrichtung zur Erzeugung mindestens einer vorgegebenen Lichtverteilung eingesetzt. Das Lichtmodul 30 umfasst mindestens eine Lichtquelle 32 und mindestens ein erfindungsgemäßes Lichtleiterelement 2 zum Umlenken des von der Lichtquelle 32 ausgesandten Lichts. Die Lichtquelle 32 ist vorzugsweise als eine Halbleiterlichtquelle, insbesondere als eine Leuchtdiode (LED) ausgebildet. Dabei ist die Licht emittierende Fläche der LED 32 beziehungsweise der Mittelpunkt der Licht emittierenden Fläche bevorzugt in dem gemeinsamen Brennpunkt der Einkoppelelemente 16, 16' angeordnet.

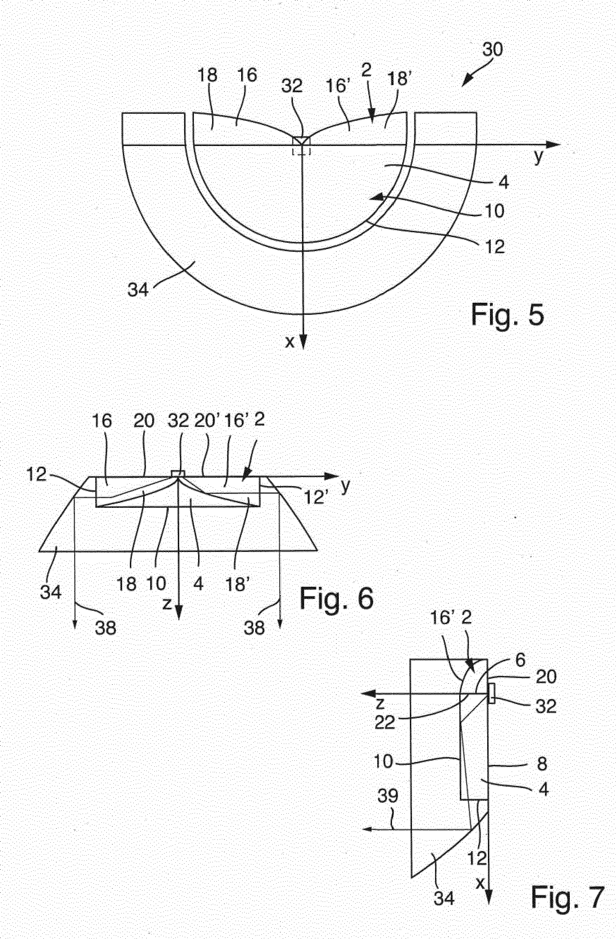

Das Lichtmodul 30 weist ferner ein dem Auskoppelabschnitt 12 des Lichtleiterelements 2 zugeordnetes Reflexionselement 34 auf, das zumindest einen Teil des ausgekoppelten Lichts zur Erzeugung der mindestens einen vorgegebenen Lichtverteilung des Lichtmoduls 30 nochmals umlenkt. In dem in Figur 4 gezeigten Ausführungsbeispiel ist das Reflexionselement 34 als ein herkömmlicher Spiegelreflektor ausgebildet. Eine Reflexionsfläche des Reflexionselements 34 wird in diesem Fall durch eine Spiegelfläche gebildet, die in einem Abstand zu der gebogenen Seitenfläche des Auskoppelabschnitts 12 des Lichtleiterelements 2 angeordnet ist. Vorzugsweise erstreckt sich die Reflexionsfläche in der x-/y-Ebene oder einer dazu parallelen Ebene betrachtet (vgl. Figur 5) in einem konstanten Abstand zu dem Auskoppelabschnitt 12 bzw. der entsprechenden gebogenen Seitenfläche. Die Grundform der Reflexionsfläche 34 ist ausgehend von einem geraden Kurvenabschnitt 36, einem Parabelabschnitt, einem parabelähnlichen Abschnitt oder einen beliebig anderen Kurvenabschnitt durch Schwenken des Abschnitts 36 um die z-Achse um ca. 180° im Uhrzeigersinn gegeben. Selbstverständlich kann die Reflexionsfläche 34 auch als ein beliebig geformter Freiformreflektor ausgestaltet sein. Dabei werden diskrete Punkte der Reflexionsfläche 34 einzeln mit dem Ziel berechnet, eine vorgegebene Lichtverteilung zu erzeugen. Die berechneten diskreten Punkte werden dann interpoliert, um die gesamte Reflexionsfläche 34 zu erhalten.

In den Figuren 5 bis 7 sind verschiedene Ansichten des erfindungsgemäßen Lichtmoduls 30 aus Figur 4 gezeigt. Figur 5 zeigt eine Draufsicht in entgegen der z-Richtung auf das Lichtmodul 30 aus Figur 4. Figur 6 zeigt einen Schnitt in der y-/z-Ebene durch das Lichtmodul 30, und Figur 7 zeigt einen Schnitt in der x-/z-Ebene durch das Lichtmodul 30. In den Figuren 6 und 7 sind zudem beispielhaft Strahlenverläufe des von der Lichtquelle 32 ausgesandten Lichts eingezeichnet. Die Lichtquelle 32 ist in Figur 5 unterhalb des Lichtleiterelements 2 angrenzend an die ebene Oberfläche 8 angeordnet. Man erkennt gut, dass von der Lichtquelle 32 ausgesandte Lichtstrahlen 38 über die Lichteintrittsfläche 20, 20' in ein Einkoppelelement 16, 16' eintreten, dort an der paraboloidförmigen Reflexionsfläche 18, 18' total reflektiert werden, über die Lichtaustrittsfläche 22, 22' und den Einkoppelabschnitt 6 in den Lichtleitkörper 4 eintreten, dort entweder direkt über den Auskoppelabschnitt 12 ausgekoppelt werden oder aber durch Totalreflexion an einer oder mehreren der Oberflächen 8, 10 des Lichtleitkörpers 4 über den Auskoppelabschnitt 12 ausgekoppelt werden, auf die Reflexionsfläche 34 treffen und durch diese zur Erzielung der vorgegebenen Lichtverteilung umgelenkt werden (vergleiche Figur 6). Oder aber, ein von der Lichtquelle 32 ausgesandter Lichtstrahl 39 tritt über die im Wesentlichen ebene Oberfläche 8 des Lichtleitkörpers 4 in diesen ein, wird zumindest an der gegenüberliegenden Oberfläche 10 des Lichtleitkörpers 4 total reflektiert und verlässt den Lichtleitkörper 4 dann über den Auskoppelabschnitt 12, trifft auf die Reflexionsfläche 34 und wird durch diese zur Erzeugung der vorgegebenen Lichtverteilung umgelenkt (vergleiche Figur 7).

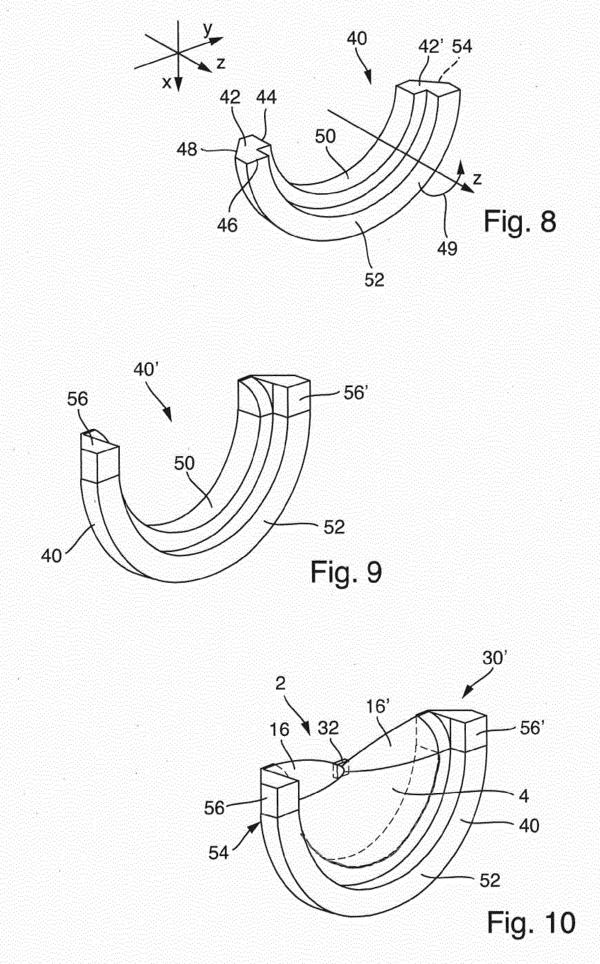

In Figur 8 ist ein alternatives Reflexionselement 34 in Form eines Reflexionskörper 40 aus einem transparenten Glas- oder Kunststoffmaterial, einem sogenannten TIR (Total Internal Reflektion)-Refraktors dargestellt. Die Grundform des Reflexionskörpers 40 ergibt sich dadurch, dass man von einer Basisfläche 42 in der y-/z-Ebene ausgeht. Die Basisfläche 42 weist eine erste Kante 44 sowie eine zweite Kante 46 auf, die vorzugsweise in einem rechten Winkel zu der ersten Kante 44 angeordnet ist. Außerdem verfügt die Basisfläche 42 über eine dritte Kante 48, die in einem Winkel von etwa 45° bezüglich der ersten Kante 44 und bezüglich der zweiten Kante 46 angeordnet ist. Durch Drehen der Basisfläche 42 um die z-Achse entgegen dem Uhrzeigersinn um etwa 180° ergibt sich die Grundform des TIR-Refraktors 40. Die Drehung um die z-Achse ist durch den Pfeil 49 veranschaulicht. Durch die Rotation der Basisfläche 42 um die z-Achse bildet die erste Kante 44 eine Innenfläche 50 eines Hohlzylinders, die als Lichteintrittsfläche des TIR-Refraktors 40 dient. Die zweite Kante 46 bildet dabei eine Stirnfläche 52 eines Hohlzylinders, die als Lichtaustrittsfläche des TIR-Refraktors 40 dient. Die dritte Kante 48 bildet durch die Drehung um die z-Achse eine sowohl zu der Lichteintrittsfläche 50 als auch zu der Lichtaustrittsfläche 52 in etwa in einem Winkel von 45° stehende Reflexionsfläche 54 des TIR-Refraktors 40, an der eingekoppeltes Licht mittels Totalreflexion umgelenkt wird.

In Figur 9 ist ein weiteres Ausführungsbeispiel eines Reflexionselements in Form eines TIR-Refraktors 40' dargestellt. Der TIR-Refraktor 40' aus Figur 9 unterscheidet sich von dem TIR-Refraktor 40 aus Figur 8 insbesondere dadurch, dass auf der Basisfläche 42 des TIR-Refraktors 40 und auf der entsprechenden, um 180° um die z-Achse gedrehten Fläche 42' Abschlusselemente 56, 56' angeordnet sind. Die Abschlusselemente 56, 56' können dazu dienen, die Effizienz des Lichtmoduls 30' (vgl. Figur 10) zu verbessern, indem ein unerwünschtes Auskoppeln von Lichtstrahlen aus dem TIR-Refraktor 40' über die Basisfläche 42 beziehungsweise die entsprechende Fläche 42' verhindert wird. Die Abschlusselemente 56, 56' können aber auch zur Verbesserung des äußeren Erscheinungsbilds des Lichtmoduls 30' dienen. Insbesondere können die Abschlusselemente 56, 56' so ausgebildet sein, dass sich das eingesetzte Lichtleiterelement 2 beziehungsweise dessen Außenflächen 8, 10, 18 bündig an die Abschlusselemente 56, 56' beziehungsweise den TIR-Refraktor 40' anschließen (vergleiche Figur 10).

In Figur 10 ist ein weiteres bevorzugtes Ausführungsbeispiel eines erfindungsgemäßen Lichtmoduls 30' dargestellt. Statt eines Spiegelreflektors 34 weist dieses Lichtmodul 30' den TIR-Refraktor 40, 40'(wahlweise mit den Abschlusselementen 56, 56') auf, um über den Auskoppelabschnitt 12 aus dem Lichtleitkörper 4 ausgekoppeltes Licht zur Erzeugung einer gewünschten Lichtverteilung umzulenken. Das über den Auskoppelabschnitt 12 ausgekoppelte Licht gelangt über die Lichteintrittsfläche 50 in den TIR-Refraktor 40, 40', wird an der schräg stehenden Reflexionsfläche 54 mittels Totalreflexion reflektiert und verlässt den TIR-Refraktor 40, 40' über die Lichtaustrittsfläche 52 wieder. Das über die Lichtaustrittsfläche 52 ausgekoppelte Licht wird unmittelbar oder mittelbar zur Erzeugung der gewünschten Lichtverteilung genutzt.

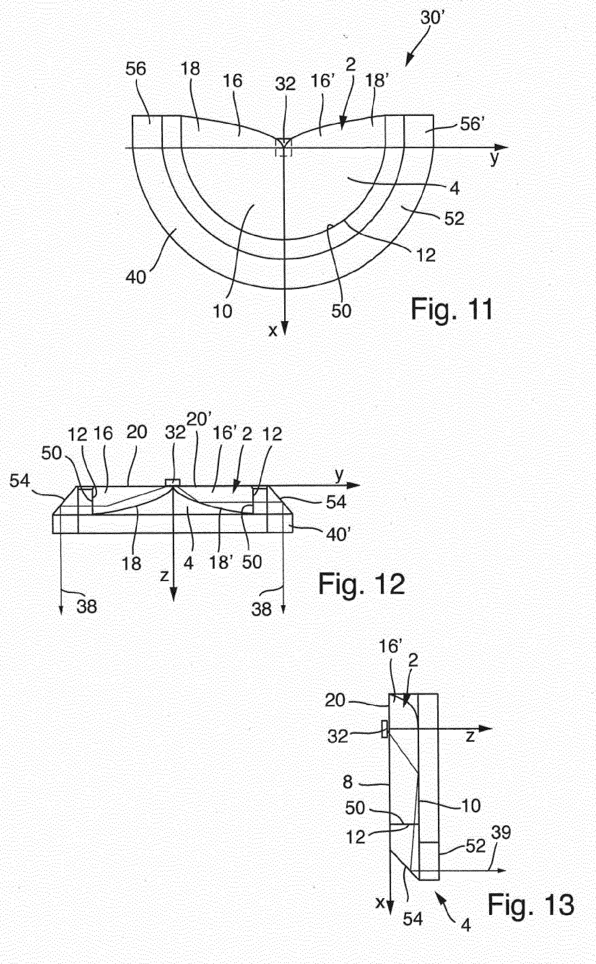

In den Figuren 11 bis 13 sind verschiedene Ansichten des Lichtmoduls 30' aus Figur 10 dargestellt. So zeigt Figur 11 eine Draufsicht entgegen der z-Richtung in der x-/y-Ebene auf das Lichtmodul 30'. In Figur 12 ist ein Schnitt in der y-/z-Ebene durch das Lichtmodul 30' und in Figur 13 ein Schnitt in der x-/z-Ebene durch das Lichtmodul 30' aus Figur 10 gezeigt. Zudem sind in den Figuren 12 und 13 beispielhaft Strahlengänge 38, 39 für von der Lichtquelle 32 ausgesandte Lichtstrahlen 38, 39 beispielhaft eingezeichnet. Bezüglich der Figuren 11 bis 13 gelten die Ausführungen bezüglich der Figuren 5 bis 7 in entsprechender Weise.

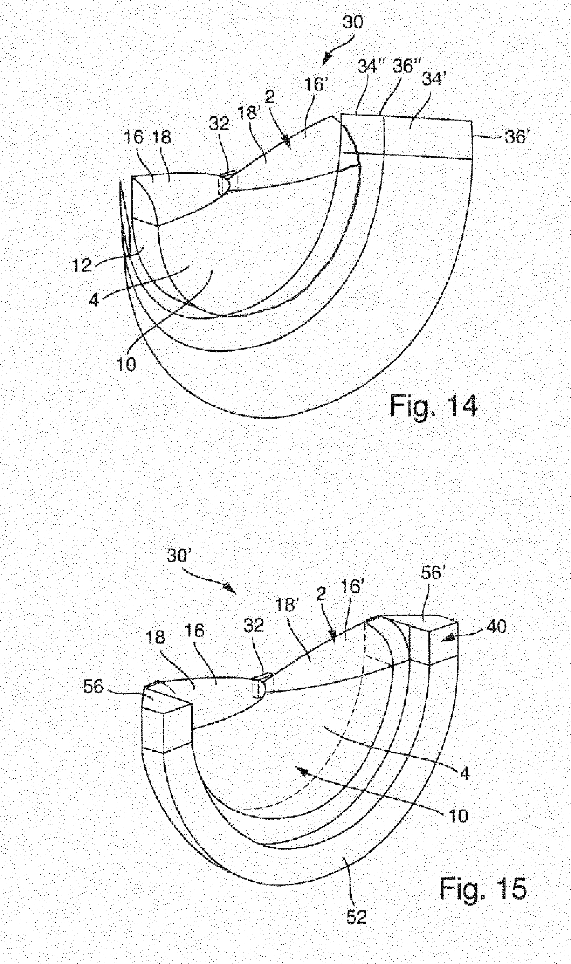

In Figur 14 ist ein weiteres Ausführungsbeispiel eines erfindungsgemäßen Lichtmoduls 30 dargestellt. Im Unterschied zu dem Lichtmodul 30 aus Figur 4 ist in dem Ausführungsbeispiel aus Figur 14 die Reflexionsfläche 34 zweigeteilt. Die Grundform des Reflektorelements 34 entsteht dabei durch eine erste Basiskurve 36', die in eine zweite Basiskurve 36" übergeht. Die erste Basiskurve 36' ist beispielsweise eine gerade, eine Parabel, eine parabelähnliche Kurve oder eine beliebig andere Kurve. Dementsprechend kann auch die zweite Basiskurve 36" als eine gerade, eine Parabel, eine parabelähnliche Kurve oder eine beliebig andere Kurve, insbesondere unterschiedlich zu der ersten Basiskurve 36', ausgebildet sein. Durch Rotation der Basiskurven 36', 36" um die z-Achse entsteht die Reflexionsfläche des Reflexionselements 34. Dabei bildet die erste Basiskurve 36' eine erste Reflexionsfläche 34', und die zweite Basiskurve 36" bildet eine zweite Reflexionsfläche 34", die sich bündig an die erste Reflexionsfläche 34' anschließt.

In Figur 15 ist ein weiteres Ausführungsbeispiel eines erfindungsgemäßen Lichtmoduls 30' dargestellt, das von dem in Figur 10 gezeigten Lichtmodul 30 mit einem TIR-Refraktor 40, 40' ausgeht. Im Unterschied zu dem Lichtmodul 30' aus Figur 10 sind bei dem Lichtmodul 30' aus Figur 15 auf der Lichtaustrittsfläche 52 des TIR-Refraktors 40, 40' zumindest abschnittsweise optisch wirksame Elemente angeordnet. Diese können beispielsweise als beliebige Optiken (zum Beispiel Zylinderlinse, Walzen, Prismen, eine Mikrostruktur, etc.) ausgestaltet sein. Dadurch kann ein Beeinflussen des hindurchtretenden Lichts, insbesondere eine Homogenisierung und/oder eine Streuung des hindurchtretenden Lichts, erzielt werden.

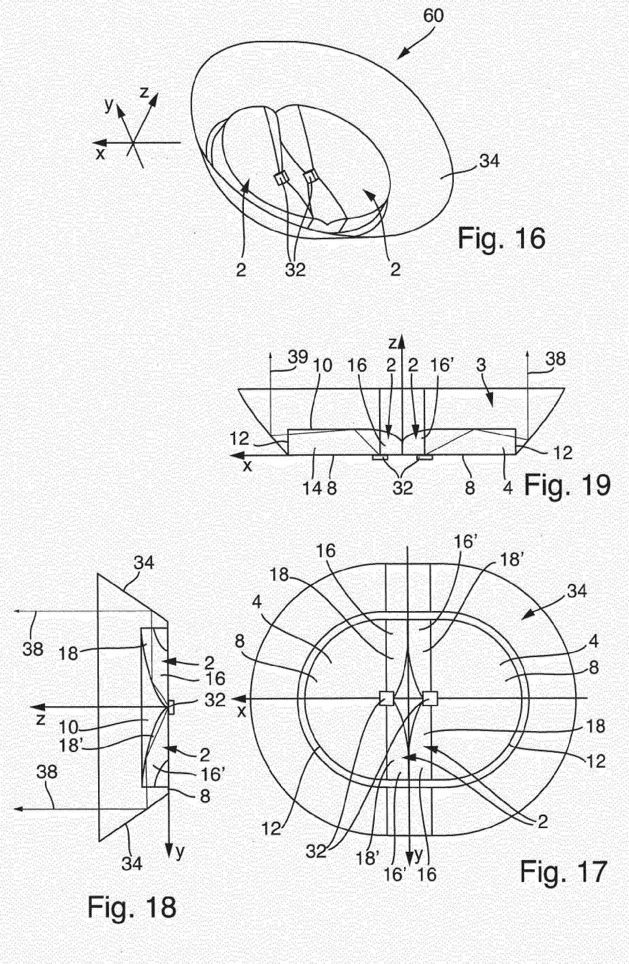

Ein weiteres Ausführungsbeispiel für ein erfindungsgemäßes Lichtmodul 60 wird nachfolgend anhand der Figuren 16 bis 19 näher beschrieben. Vom Funktionsprinzip her wird von einem Lichtmodul 30 ausgegangen, wie es beispielsweise in Figur 4 gezeigt ist. Um zu dem Lichtmodul 60 aus den Figuren 16 bis 19 zu gelangen, werden praktisch zwei Lichtmodule 30 aus Figur 4 miteinander kombiniert, so dass die Einkoppelelemente 16, 16' des einen Lichtmoduls 30 an die Einkoppelelemente 16, 16' des anderen Lichtmoduls 30 angrenzen. Insbesondere sind bei dem Lichtmodul 60 die Einkoppelabschnitte 6 der Lichtleitkörper 4 der beiden Lichtmodule 30 einander zugewandt und zueinander beabstandet in der x-/y-Ebene angeordnet. In dem Abstand zwischen den Einkoppelabschnitten 6 der Lichtleitkörper 4 sind die Einkoppelemente 16, 16' in einer Figur 4 entsprechenden Weise angeordnet (vgl. Figur 17).

Das Lichtmodul 60 weist mindestens zwei Lichtquellen 32 auf, die in der x-/y-Ebene oder einer dazu parallelen Ebene betrachtet (vergleiche Figur 17) jeweils in einem Abstand zu der y-/z-Ebene an die ebenen Oberflächen 8 angrenzend angeordnet sind (vgl. Figur 19). Es ist denkbar, die beiden Lichtleiterelemente 2 des Lichtmoduls 60 als eine integrale Einheit einstückig auszugestalten. Ebenso wäre es denkbar, die Lichtleitkörper 4 der beiden Lichtleiterelemente 2 separat von den Einkoppelelementen 16, 16' auszugestalten. In diesem Fall könnten die Einkoppelelemente 16, 16' beider Lichtleiterelemente 2 als ein gemeinsames integrales Bauteil ausgestaltet sein, das jedoch separat von den Lichtleitkörpern 4 der Lichtleiterelemente 2 ausgestaltet ist.

Auch bei der in den Figuren 16 bis 19 dargestellten Ausführungsform des erfindungsgemäßen Lichtmoduls 60 kann das Reflexionselement als ein Spiegelreflektor 34 oder als ein Reflexionskörper (TIR-Refraktor) 40 aus einem transparenten Material ausgebildet sein. Das Reflexionselement umfasst in dem dargestellten Ausführungsbeispiel einen Spiegel 34, der im Längsschnitt und im Querschnitt (vergleiche Figuren 18 und 19) die Form einer nach außen gewölbten Parabel aufweist. Selbstverständlich ist es auch denkbar, den Spiegel 34 als einen beliebigen Freiformreflektor auszugestalten.

Die Hauptabstrahlrichtungen (in positiver z-Richtung) der Lichtquellen 32 verlaufen in etwa parallel zu den im Wesentlichen ebenen Seitenflächen der Einkoppelabschnitte 6 der Lichtleitkörper 4 der beiden Lichtleiterelemente 2. Das von den Lichtquellen 32 ausgesandte Licht wird mittels der Einkoppelelemente 16, 16' umgelenkt, so dass es in etwa senkrecht auf die Einkoppelabschnitte 6 der Lichtleitkörper 4 trifft und in diese eingekoppelt wird. Die Richtung, in denen die Lichtstrahlen 38, 39 hauptsächlich das Lichtmodul 60 verlassen, ist in etwa parallel und gleichgerichtet zu der Hauptabstrahlrichtung der Lichtquellen 32. Die beiden Lichtquellen 32 des Lichtmoduls 60 können zur Erzeugung von unterschiedlichen Lichtverteilungen genutzt werden. Diesbezüglich wäre es auch denkbar, dass die Lichtquellen 32 Licht unterschiedlicher Farben aussenden. So könnte beispielsweise eine der Lichtquellen 32 weißes Licht zur Erzeugung eines Positionslichts oder Tagfahrlichts oder rotes Licht zur Erzeugung eines Rücklichts oder Bremslichts erzeugen, während die andere Lichtquelle 32 gelbes Licht zur Realisierung einer Blinkerfunktion erzeugt. Selbstverständlich wäre es denkbar, zur Erzeugung unterschiedlicher Lichtfunktionen durch die beiden Lichtleiterelemente 2 die Lichtleitkörper 4 bzw. die Lichteinkoppelelemente 16, 16' der beiden Lichtleiterelemente 2 bzw. die diesen zugeordneten Reflexionselemente 34 bzw. 40, 40' unterschiedlich auszugestalten.

Mit der vorliegenden Erfindung ist es somit möglich, das von mindestens zwei Lichtquellen 32 ausgesandte Licht besonders effizient derart umzulenken, dass es zur Erzeugung einer kreisbogenförmigen ausgeleuchteten Fläche und einer entsprechenden Lichtverteilung genutzt werden kann. Mit dem Lichtmodul 60 aus den Figuren 16 bis 19 kann eine im Wesentlichen ovale oder runde ausgeleuchtete Ringfläche erzeugt werden. Diese Ringfläche kann bspw. zur Erzeugung von Positionslicht und/oder Tagfahrlicht genutzt werden.

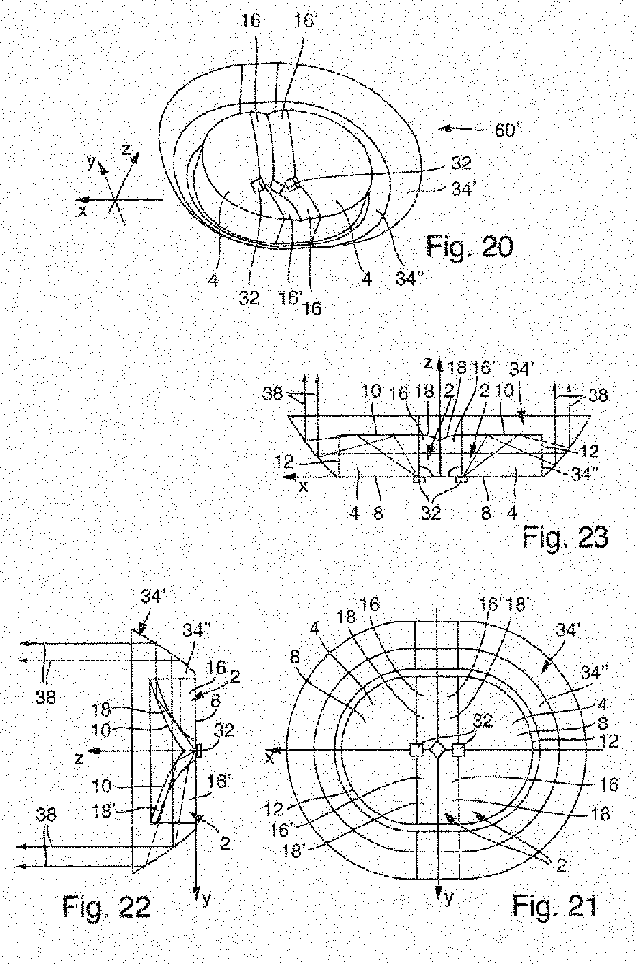

In den Figuren 20 bis 23 ist ein weiteres Ausführungsbeispiel eines erfindungsgemäßen Lichtmoduls 60' gezeigt. Das Ausführungsbeispiel des Lichtmoduls 60' aus den Figuren 20 bis 23 unterscheidet sich von dem Lichtmodul 60 aus den Figuren 16 bis 19 insbesondere dadurch, dass das äußere Reflexionselement 34 entsprechend dem Ausführungsbeispiel aus Figur 14 zweigeteilt ist und eine erste Reflexionsfläche 34' (außen) sowie eine zweite Reflexionsfläche 34" (innen) umfasst. In dem dargestellten Ausführungsbeispiel des Lichtmoduls 60' aus den Figuren 20 bis 23 haben die beiden Reflexionsflächen 34', 34" im Querschnitt (vergleiche Figuren 22 und 23) jeweils die Form von Parabeln. Vorzugsweise haben die Reflexionsflächen 34', 34" die Form unterschiedlicher Parabelabschnitte. Selbstverständlich können die Reflexionsflächen 34', 34" auch als beliebige Freiformreflektoren ausgestaltet sein.

Ein weiterer Unterschied des Lichtmoduls 60' aus den Figuren 20 bis 23 gegenüber dem Lichtmodul 60 aus den Figuren 16 bis 19 besteht darin, dass bei dem Lichtmodul 60' die Einkoppelelemente 16, 16' in der x-/y-Ebene (vergleiche Figur 21) näher in Richtung auf die y-/z-Ebene gerückt sind. Das führt dazu, dass aneinandergrenzende Einkoppelelemente 16, 16' der beiden verwendeten Lichtleiterelemente 2 über einen größeren Bereich ineinander übergehen als dies bei dem Lichtmodul 60 aus den Figuren 16 bis 19 der Fall ist (vergleiche die Figur 21 mit der Figur 17). Dies macht eine Ausgestaltung der Einkoppelelemente 16, 16' der beiden Lichtleiterelemente 2 als ein integrales Bauteil und einstückig vorteilhaft.

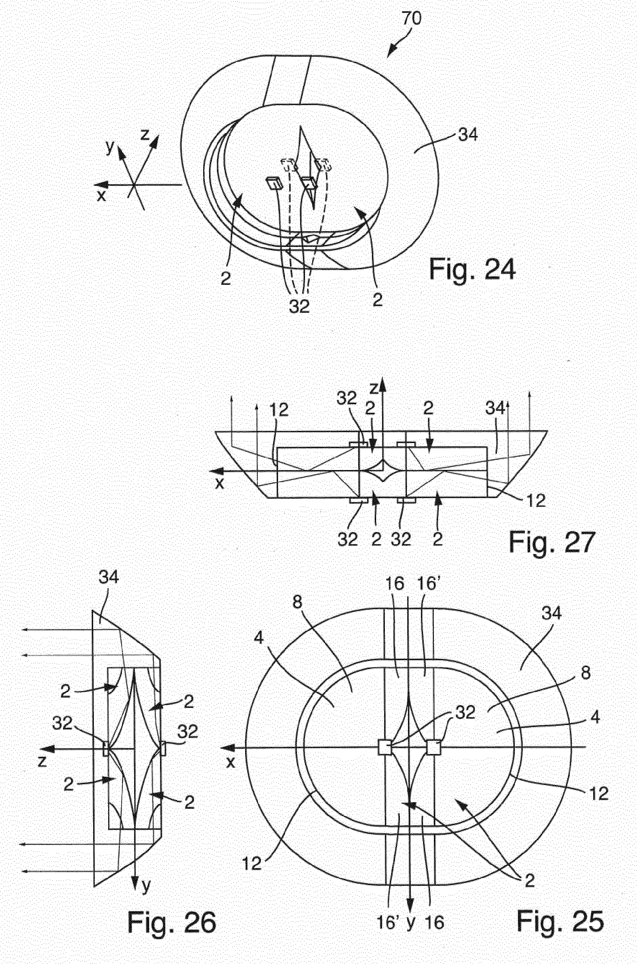

In den Figuren 24 bis 27 ist ein weiteres Ausführungsbeispiel eines erfindungsgemäßen Lichtmoduls 70 gezeigt. Dabei sind ausgehend von dem Lichtmodul 60 aus den Figuren 16 bis 19 zwei Lichtleiterelementepaare, wie sie in dem Lichtmodul 60 aus den Figuren 16 bis 19 verwendet werden, übereinander angeordnet, so dass die gebogenen Seitenflächen des Auskoppelabschnitts 12 der insgesamt vier Lichtleitkörper 4 eine größere, insbesondere in z-Richtung höhere Lichtauskoppelfläche bilden. Die Lichtleiterelementepaare sind derart aufeinander gelegt, dass die Oberflächen 10 der Lichtleitkörper 4 der beiden Lichtleiterelementepaare einander zugewandt sind. Das über die Auskoppelabschnitte 12 ausgekoppelte Licht trifft wiederum auf einen gemeinsamen Reflektor 34, der in den Figuren 24 bis 27 als im Querschnitt parabelförmig gezeigt ist, jedoch auch als ein beliebiger Freiformreflektor ausgestaltet sein könnte.

Bei dem Lichtmodul 70 sind jeweils zwei Lichtleiterelemente 2 mit einander zugewandten und zueinander beabstandeten Einkoppelabschnitten 6 oberhalb der x-/y-Ebene und jeweils zwei weitere Lichtleiterelemente 2 mit einander zugewandten und zueinander beabstandeten Einkoppelabschnitten 6 unterhalb der x-/y-Ebene angeordnet. Jeweils zwei in einer gemeinsamen Ebene, die parallel zu der x-/y-Ebene verläuft, angeordneten Lichtleiterelemente 2 bilden ein Lichtleiterelementepaar. Die y-/z-Ebene verläuft in etwa in der Mitte zwischen den Einkoppelabschnitten 6 der beiden Lichtleiterelementepaare, und die x-/y-Ebene verläuft zwischen den Oberflächen 10 der beiden Lichtleiterelementepaare. Das Lichtmodul 70 weist mindestens vier Lichtquellen 32 auf, die in der x-/y-Ebene oder einer dazu parallelen Ebene betrachtet (vergleiche Figur 25) jeweils in einem Abstand zu der y-/z-Ebene und von denen in der y-/z-Ebene betrachtet (vergleiche Figur 26) jeweils zwei in einem Abstand zu der x-/y-Ebene angeordnet sind (vergleiche Figur 27). Die Lichtquellen 32 sind außen auf den Oberflächen 8 der Lichtleiterelemente 2 angeordnet.

Die Lichtleiterelemente 2 der beiden Lichtleiterelementepaare sind bei dem Lichtmodul 70 aus den Figuren 24 bis 27 jeweils so übereinander angeordnet, dass die im Wesentlichen ebenen Oberflächen 8 nach außen zeigen. Die Lichtquellen 32 sind dann außen auf den im Wesentlichen ebenen Oberflächen 8 angeordnet, vorzugsweise jeweils in dem gemeinsamen Brennpunkt zweier Einkoppelelemente 16, 16' eines Lichtleiterelements 2. Mit dem Lichtmodul 70 können bis zu vier unterschiedliche Lichtfunktionen erzeugt werden. Wenn beispielsweise bei der Verwendung des Lichtmoduls 70 in einer Heckleuchte zwei der Lichtquellen 32 rotes Licht aussenden, können diese zur Erzeugung eines Rücklichts (nur eine rote LED 32 eingeschaltet) und eines Bremslichts (beide roten LEDs 32 eingeschaltet) genutzt werden. Ferner kann noch eine weitere LED 32 vorgesehen werden, die weißes Licht für einen Rückfahrscheinwerfer erzeugt. Schließlich kann noch eine weitere LED 32 vorgesehen werden, die gelbes oder orangenes Licht zur Realisierung einer Blinklichtfunktion erzeugt. Auf diese Weise kann ein hocheffizientes, hochintegriertes, LED-Lichtmodul 70 realisiert werden.

Ausgehend von dem Ausführungsbeispiel aus Figur 27 wäre es gemäß einer alternativen Ausgestaltung der Erfindung denkbar, die LEDs 32 nicht außen auf den Lichtleiterelementen 2, sondern innen zwischen den Lichtleiterelementen 2 anzuordnen. Dazu könnte bspw. in der x-/y-Ebene ein Schaltungsträger angeordnet sein, der auf beiden Seiten mit LEDs 32 bestückt ist. In diesem Fall müssten dann die oberen Lichtleiterelemente 2 mit den unteren Lichtleiterelementen 2 vertauscht werden, damit die Lichteintrittsflächen 8, 20, 20' nicht mehr an der Ober- bzw. Unterseite des Lichtmoduls 70, sondern zwischen den Oberflächen der beiden Lichtleiterelementepaare angeordnet sind. Dies erlaubt eine besonders einfache und kostengünstige Ausgestaltung des Lichtmoduls 70.

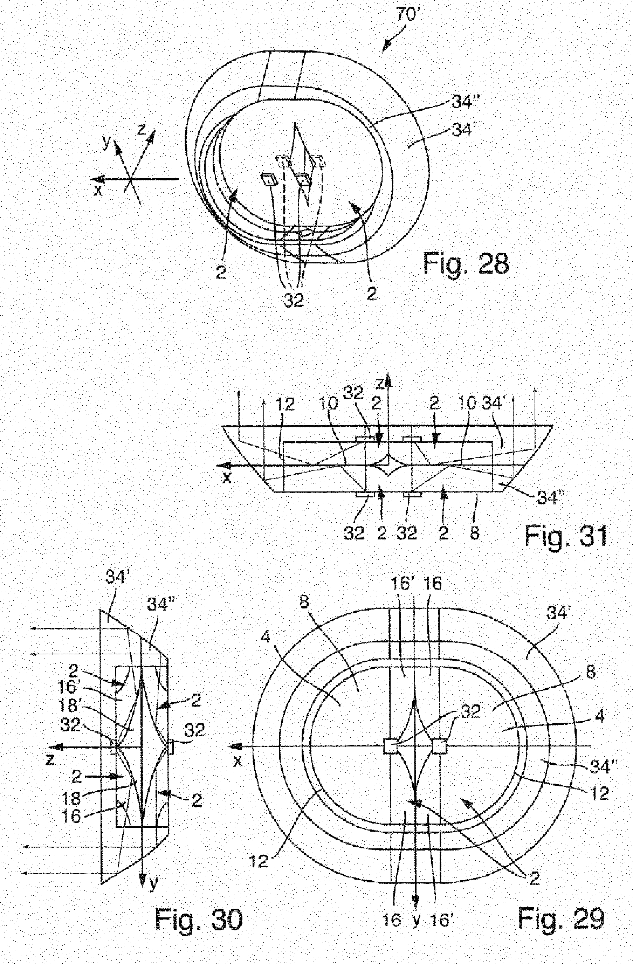

In den Figuren 28 bis 31 ist schließlich ein letztes bevorzugtes Ausführungsbeispiel eines erfindungsgemäßen Lichtmoduls 70' gezeigt. Dieses unterscheidet sich von dem Lichtmodul 70 aus den Figuren 24 bis 27 insbesondere dadurch, dass das äußere Reflexionselement 34 - ähnlich wie bei dem Ausführungsbeispiel aus den Figuren 20 bis 23 - zweigeteilt ist und einen ersten Spiegelreflektor 34' und einen zweiten Spiegelreflektor 34" aufweist.

Ausgehend von dem Ausführungsbeispiel aus Figur 31 wäre es gemäß einer alternativen Ausgestaltung der Erfindung denkbar, die LEDs 32 nicht außen auf den Lichtleiterelementen 2, sondern innen zwischen den Lichtleiterelementen 2 anzuordnen. Dazu könnte bspw. in der x-/y-Ebene ein Schaltungsträger angeordnet sein, der auf beiden Seiten mit LEDs 32 bestückt ist. In diesem Fall müssten dann die oberen Lichtleiterelemente 2 mit den unteren Lichtleiterelementen 2 vertauscht werden, damit die Lichteintrittsflächen 8, 20, 20' nicht mehr an der Ober- bzw. Unterseite des Lichtmoduls 70', sondern zwischen den Oberflächen der beiden Lichtleiterelementepaare angeordnet sind.

Bei allen beschriebenen Ausführungsbeispiele der Figuren 17 bis 31 könnte statt eines externen Spiegelreflektors 34 auch ein TIR-Refraktor 40, 40' verwendet werden. Ferner könnten statt einzelner LEDs auch mehrere LEDs je Lichtquelle 32 verwendet werden.

Analog zur Anordnung von zwei Lichtleitkörpern 2 in einem umgebenden Spiegelelement 34, 40 können auch mehr als zwei Lichtleitkörper 2 je Lichtmodul 30 eingesetzt werden. Ferner können die Lichtleiterkörper 2 unterschiedliche Winkel um die z-Achse aufweisen. Neben der direkten Einkopplung der Lichtquellen 32 in den Lichtleitkörper 2 kann das Licht der Lichtquellen 32 auch zunächst in einen Stablichtleiter eingekoppelt werden, so dass das Licht von dem Stablichtleiter an die Lichtleitereinkoppelstelle 8, 20, 20' des Lichtleiterkörpers 2 transportiert wird.

## Patentansprüche

1. Sich in einer Ebene erstreckendes, plattenförmiges Lichtleiterelement (2) aus einem transparenten Material zum Umlenken des von mindestens einer Lichtquelle (32) ausgesandten Lichts, das Lichtleiterelement (2) umfassend einen Einkoppelabschnitt (6) zum Einkoppeln des Lichts, totalreflektierende äußere Grenzflächen und einen Auskoppelabschnitt (12) zum Auskoppeln des Lichts, wobei das Lichtleiterelement (2) zwei zueinander beabstandete, gegenüberliegende Oberflächen (8, 10), welche zumindest teilweise die totalreflektierenden Grenzflächen bilden und deren Kontur in der Erstreckungsebene des Lichtleiterelements (2) jeweils einerseits durch einen gebogenen Kurvenabschnitt und andererseits durch einen Sekantenabschnitt definiert ist, eine gebogene Seitenfläche, welche die Oberflächen (8, 10) entlang ihrer Kontur im Bereich des gebogenen Kurvenabschnitts miteinander verbindet, und eine ebene Seitenfläche aufweist, welche die Oberflächen (8, 10) entlang ihrer Kontur im Bereich des Sekantenabschnitts miteinander verbindet, wobei der Einkoppelabschnitt (6) durch die ebene Seitenfläche und der Auskoppelabschnitt (12) durch die gebogene Seitenfläche gebildet ist, **dadurch gekennzeichnet, dass** dem Einkoppelabschnitt (6) mindestens eine bezüglich der ebenen Seitenfläche des Lichtleiterelements (2) zumindest abschnittsweise schräg stehende Reflexionsfläche (18; 18') zugeordnet ist, welche zumindest einen Teil des von der mindestens einen Lichtquelle (32) ausgesandten Lichts zur Einkopplung in das Lichtleiterelement (2) auf die ebene Seitenfläche lenkt, wobei die Reflexionsfläche (18; 18') eine Form aufweist, die sich nach einer Rotation einer Basiskurve (14') ergibt und ein räumliches Bezugssystem durch drei jeweils senkrecht aufeinander stehende x-, y- und z-Achsen definiert ist, wobei eine Oberfläche (8) des Lichtleiterelements (2) in einer durch die x- und y-Achsen aufgespannten x-/y-Ebene liegt, wobei die ebene Seitenfläche des Einkoppelabschnitts (6) des Lichtleiterelements (2) entlang der y-Achse verläuft und eine x-/z-Ebene die ebene Seitenfläche in zwei gleich große Teilflächen unterteilt und wobei der Abstand zwischen den beiden gegenüberliegenden Oberflächen (8, 10) ausgehend von dem Auskoppelabschnitt (12) zum Ursprung des Bezugssystems hin abnimmt, und dass sich die Form einer Reflexionsfläche (18; 18') ergibt, wenn von der Basiskurve (14'), die mit ihrem Brennpunkt im Ursprung des Bezugssystems in der x-/y-Ebene liegt, nur der Teil für negative x-Werte und negative y-Werte um 90° um die y-Achse rotiert und in Richtung der ebenen Seitenfläche des Lichtleiterelements (2) umklappt.

2. Lichtleiterelement (2) nach Anspruch 1, **dadurch gekennzeichnet, dass** die Basiskurve (14') als eine Parabel oder eine parabelähnliche Kurve ausgebildet ist.

3. Lichtleiterelement (2) nach Anspruch 2, **dadurch gekennzeichnet, dass** die parabelähnliche Kurve eine mit Termen höherer Ordnung modifizierte Parabel ist.

4. Lichtleiterelement (2) nach einem der Ansprüche 1 bis 3, **dadurch gekennzeichnet, dass** dem Einkoppelabschnitt (6) mindestens ein aus einem transparenten Material gefertigtes Einkoppelelement (16; 16') zugeordnet ist, wobei die Reflexionsfläche (18; 18') von einer totalreflektierenden Grenzfläche des mindestens einen Einkoppelelements (16; 16') gebildet ist.

5. Lichtleiterelement (2) nach Anspruch 4, **dadurch gekennzeichnet, dass** dem Einkoppelabschnitt (6) zwei bezüglich der x-/z-Ebene spiegelbildlich ausgebildete Einkoppelelemente (16, 16') zugeordnet sind.

6. Lichtleiterelement (2) nach einem der Ansprüche 1 bis 5, **dadurch gekennzeichnet, dass** sich die Form einer Oberfläche (10) des Lichtleiterelements (2) ergibt, wenn die um die y-Achse rotierte und in Richtung der ebenen Seitenfläche des Lichtleiterelements umgeklappte Basiskurve (14') um 180° um die z-Achse rotiert.

7. Lichtleiterelement (2) nach Anspruch 6, **dadurch gekennzeichnet, dass** die andere Oberfläche (8) des Lichtleiterelements (2), die der durch Rotation der umgeklappten Basiskurve (14') um die z-Achse erzeugten ersten Oberfläche (10) des Lichtleiterelements (2) gegenüberliegt, eine ebene Form aufweist.

8. Lichtleiterelement (2) nach einem der Ansprüche 4 bis 7, **dadurch gekennzeichnet, dass** das mindestens eine Einkoppelelement (16; 16') eine integrale Einheit mit dem restlichen Lichtleiterelement (4) bildet und einstückig mit diesem ausgebildet ist.

9. Lichtmodul (30; 30'; 60; 60'; 70; 70') für eine Kraftfahrzeug-Beleuchtungseinrichtung zur Erzeugung mindestens einer vorgegebenen Lichtverteilung, das Lichtmodul (30; 30'; 60; 60'; 70; 70') umfassend mindestens eine Lichtquelle (32) und mindestens ein plattenförmiges Lichtleiterelement (2) zum Umlenken des von der Lichtquelle (32) ausgesandten Lichts, **dadurch gekennzeichnet, dass** das mindestens eine Lichtleiterelement (2) nach einem der Ansprüche 1 bis 8 ausgebildet ist.

10. Lichtmodul (30; 30'; 60; 60'; 70; 70') nach Anspruch 9, **dadurch gekennzeichnet, dass** das Lichtmodul (30; 30'; 60; 60'; 70; 70') ferner ein dem Auskoppelabschnitt (12) des Lichtleiterelements (2) zugeordnetes Reflexionselement (34; 34', 34''; 40; 40') umfasst, welches zumindest einen Teil des ausgekoppelten Lichts zur Erzeugung mindestens einer gewünschten Lichtverteilung des Lichtmoduls (30; 30'; 60; 60'; 70; 70') umlenkt.

11. Lichtmodul (30; 30'; 60; 60'; 70; 70') nach Anspruch 10, **dadurch gekennzeichnet, dass** das Reflexionselement als ein Spiegelreflektor (34; 34', 34'') oder als ein Reflexionskörper (40; 40') aus einem transparenten Material ausgebildet ist.

12. Lichtmodul (30; 30'; 60; 60'; 70; 70') nach Anspruch 10 oder 11, **dadurch gekennzeichnet, dass** sich eine Reflexionsfläche (34; 34', 34''; 54) des Reflexionselements (34; 34', 34''; 40; 40') in einem Abstand, vorzugsweise in einem konstanten Abstand, zu der gebogenen Seitenfläche des Auskoppelabschnitts (12) des Lichtleiterelements (2) erstreckt.

13. Lichtmodul (30; 30'; 60; 60'; 70; 70') nach einem der Ansprüche 9 bis 12, **dadurch gekennzeichnet, dass** eine Hauptabstrahlrichtung der mindestens einen Lichtquelle (32) parallel zu der ebenen Seitenfläche des Einkoppelabschnitts (6) verläuft.

14. Lichtmodul (30; 30'; 60; 60'; 70; 70') nach Anspruch 12 oder 13, **dadurch gekennzeichnet, dass** die dem Einkoppelabschnitt (6) des Lichtleiterelements (2) zugeordnete schräg stehende Reflexionsfläche (18; 18') auf einer Seite einen größeren Abstand zu der ebenen Seitenfläche des Einkoppelabschnitts (6) aufweist als auf einer anderen Seite und dass die mindestens eine Lichtquelle (32) auf der Seite des Lichtleiterelements (2) angeordnet ist, auf der die Reflexionsfläche (18; 18') den größeren Abstand zu der ebenen Seitenfläche aufweist.

15. Lichtmodul (30; 30'; 60; 60'; 70; 70') nach einem der Ansprüche 9 bis 14, **dadurch gekennzeichnet, dass** die mindestens eine Lichtquelle (32) mindestens eine Halbleiterlichtquelle, insbesondere mindestens eine Leuchtdiode, aufweist.

16. Lichtmodul (30; 30'; 60; 60'; 70; 70') nach einem der Ansprüche 9 bis 15, **dadurch gekennzeichnet, dass** das Lichtmodul (30; 30'; 60; 60'; 70; 70') zwei Lichtleiterelemente (2) nach einem der Ansprüche 1 bis 10 aufweist, die mit einander zugewandten und zueinander beabstandeten Einkoppelabschnitten (6) in der x-/y-Ebene angeordnet sind, wobei die y-/z-Ebene in der Mitte zwischen den beiden Einkoppelabschnitten (6) liegt, und dass das Lichtmodul (30; 30'; 60; 60'; 70; 70') zwei Lichtquellen (32) aufweist, die in der x-/y-Ebene oder einer dazu parallelen Ebene betrachtet jeweils in einem Abstand zu der y-/z-Ebene auf den gleichen Oberflächen (8; 10) der Lichtleiterelemente (2) angeordnet sind.

17. Lichtmodul (30; 30'; 60; 60'; 70; 70') nach einem der Ansprüche 9 bis 16, **dadurch gekennzeichnet, dass** das Lichtmodul (30; 30'; 60; 60'; 70; 70') vier Lichtleiterelemente (2) nach einem der Ansprüche 1 bis 10 aufweist, wobei jeweils zwei Lichtleiterelemente (2) mit einander zugewandten und zueinander beabstandeten Einkoppelabschnitten (6) oberhalb der x-/y-Ebene und jeweils zwei weitere Lichtleiterelemente (2) mit einander zugewandten und zueinander beabstandeten Einkoppelabschnitten (6) unterhalb der x-/y-Ebene angeordnet sind, wobei jeweils zwei in einer gemeinsamen Ebene angeordneten Lichtleiterelemente (2) ein Lichtleiterelementepaar bilden, wobei die y-/z-Ebene in der Mitte zwischen den beiden Einkoppelabschnitten (6) eines Lichtleiterelementepaars und die x-/y-Ebene zwischen den beiden Lichtleiterelementepaaren verläuft, und dass das Lichtmodul (30; 30'; 60; 60'; 70; 70') vier Lichtquellen (32) aufweist, die in der x-/y-Ebene oder einer dazu parallelen Ebene betrachtet jeweils in einem Abstand zu der y-/z-Ebene und von denen in der y-/z-Ebene betrachtet jeweils zwei in einem Abstand zu der x-/y-Ebene angeordnet sind.

18. Lichtmodul (30; 30'; 60; 60'; 70; 70') nach Anspruch 17, **dadurch gekennzeichnet, dass** die Lichtleiterelementepaare jeweils mit nach außen gerichteten ebenen Oberflächen (8) in dem Lichtmodul (30; 30'; 60; 60'; 70; 70') angeordnet sind.

19. Lichtmodul (30; 30'; 60; 60'; 70; 70') nach einem der Ansprüche 16 bis 18, **dadurch gekennzeichnet, dass** das von den verschiedenen Lichtquellen (32) ausgesandte Licht zur Erzeugung von unterschiedlichen Lichtverteilungen dient.

20. Lichtmodul (30; 30'; 60; 60'; 70; 70') nach einem der Ansprüche 16 bis 19, **dadurch gekennzeichnet, dass** zumindest zwei der Lichtquellen (32) Licht unterschiedlicher Farben aussenden.

## Claims

1. An in a plane extending plate-shaped light guide element (2) of a transparent material for deflecting the light emitted from at least one light source (32), the light guide element (2) comprising an in-coupling section (6) for coupling in the light, totally reflecting outer boundary surfaces and an decoupling section (12) for coupling out the light, wherein the light guide element (2) comprises two opposing surfaces (8, 10) which are spaced apart from one another and which at least partially form the total-reflecting boundary surfaces and whose contour in the plane of extension of the light guide element (2) is defined in each case, on the one hand, by a curved curve section and, on the other hand, by a secant section, a curved side surface interconnecting the surfaces (8, 10) along their contour in the region of the curved secant section, and a flat side surface interconnecting the surfaces (8, 10) along their contour in the region of the secant portion, the in-coupling section (6) being formed by the flat side surface and the decoupling section (12) being formed by the curved side surface, **characterized in that** at least one reflecting surface (18) which is at least in sections inclined to the flat side surface of the light guide element (2, 18'), and which directs at least a part of the light emitted by the at least one light source (32) onto the flat side surface for coupling into the light guide element (2), is associated to the in-coupling section (6) wherein the reflecting surface (18; 18') has a shape which results after a rotation of a base curve (14') and a spatial reference system is defined by three x, y and z axes which are respectively perpendicular to one another, wherein a surface (8) of the light guide element (2) lying in an x/y plane spanned by the x and y axes, wherein the flat side surface of the in-coupling section (6) of the light guide element (2) extends along the y-axis and an x/z plane divides the flat side surface into two equally large partial surfaces, and wherein the distance between the two opposite surfaces (8, 10) decreases starting from the decoupling section (12) towards the origin of the reference system, and **in that** the shape of a reflecting surface (18; 18')is formed; when only that part of the base curve (14'), which has its focal point at the origin of the reference system in the x/y plane, for negative x-values and negative y-values rotates 90° about the y-axis and folds in the direction of the plane side surface of the light guide element (2).

2. Light guide element (2) according to claim 1, **characterized in that** the base curve (14') is designed as a parabola or a parabola-like curve.

3. Light guide element (2) according to claim 2, **characterized in that** the parabola-like curve is a parabola modified with higher order terms.

4. Light guide element (2) according to one of claims 1 to 3, **characterized in that** at least one coupling element (16; 16') made of a transparent material is assigned to the in-coupling section (6), the reflecting surface (18; 18') being formed by a total-reflecting boundary surface of the at least one coupling element (16; 16').

5. Light guide element (2) according to claim 4, **characterized in that** two coupling elements (16, 16') formed mirror-inverted with respect to the x/z plane are assigned to the in-coupling section (6).

6. Light guide element (2) according to any one of claims 1 to 5, **characterized in that** the shape of a surface (10) of the light guide element (2) results when the base curve (14') rotated about the y-axis and folded in the direction of the planar side surface of the light guide element rotates 180° about the z-axis.

7. Light guide element (2) according to claim 6, **characterized in that** the other surface (8) of the light guide element (2), which faces the first surface (10) of the light guide element (2) produced by rotation of the inverted base curve (14') about the z axis, has a plane shape.

8. Light guide element (2) according to one of claims 4 to 7, **characterized in that** the at least one coupling element (16; 16') forms an integral unit with the remaining light guide element (4) and is formed as one-piece therewith.

9. Light module (30; 30'; 60; 60'; 70; 70') for a motor vehicle lighting device for generating at least one predetermined light distribution, the light module (30; 30'; 60; 60'; 70; 70') comprising at least one light source (32) and at least one plate-shaped light guide element (2) for deflecting the light emitted by the light source (32), **characterized in that** the at least one light guide element (2) is designed in accordance with one of claims 1 to 8.

10. Light module (30; 30'; 60; 60'; 70; 70') according to claim 9, **characterized in that** the light module (30; 30'; 60; 60'; 70; 70') further comprises a reflection element (34; 34', 34''; 40; 40') which is assigned to the decoupling section (12) of the light guide element (2) and which deflects at least a part of the decoupled light in order to produce at least one desired light distribution of the light module (30; 30'; 60; 60'; 70; 70'), **characterized in that** the reflection element (34; 34', 34''; 40; 40') is assigned to the decoupling section (12) of the light guide element (2) and deflects at least a part of the decoupled light in order to produce at least one desired light distribution of the light module (30; 30'; 60; 60'; 70; 70').

11. Light module (30; 30'; 60; 60'; 70; 70') according to claim 10, **characterized in that** the reflection element is designed as a mirror reflector (34; 34', 34'') or as a reflection body (40; 40') made of a transparent material.

12. Light module (30; 30'; 60; 60'; 70; 70') according to claim 10 or 11, **characterized in that** a reflection surface (34; 34', 34''; 54) of the reflection element (34; 34', 34"; 40; 40') extends at a distance, preferably at a constant distance, from the curved side surface of the decoupling section (12) of the light guide element (2).

13. Light module (30; 30'; 60; 60'; 70; 70') according to one of claims 9 to 12, **characterized in that** a main radiation direction of the at least one light source (32) runs parallel to the flat side surface of the in-coupling section (6).

14. Light module (30; 30'; 60; 60'; 70; 70') according to claim 12 or 13, **characterized in that** the obliquely positioned reflection surface (18) associated with the in-coupling section (6) of the light guide element (2) is a light module (30; 30'; 60; 60'; 70; 70') according to claim 12 or 13; 18') on one side is at a greater distance from the flat side surface of the in-coupling section (6) than on another side, and **in that** the at least one light source (32) is arranged on the side of the light guide element (2) on which the reflecting surface (18; 18') is at the greater distance from the flat side surface.

15. Light module (30; 30'; 60; 60'; 70; 70') according to one of the claims 9 to 14, **characterized in that** the at least one light source (32) comprises at least one semiconductor light source, in particular at least one light-emitting diode.

16. Light module (30; 30'; 60; 60'; 70; 70') according to one of claims 9 to 15, **characterized in that** the light module (30; 30'; 60; 60'; 70; 70') comprises two light guide elements (2) according to one of claims 1 to 10, which are arranged in the x/y plane with in-coupling sections (6) facing one another and spaced apart from one another, the y/z plane lying in the centre between the two in-coupling sections (6), and **in that** the light module (30; 30'; 60; 60'; 70; 70') comprises two light guide elements (32) according to one of claims 1 to 10, which are arranged with coupling sections (6) facing one another and spaced apart from one another in the x/y plane, the y/z plane lying in the centre between the two coupling sections (6), and **in that** the light module (30; 30'; 60; 60'; 70; 70') comprises two light sources (32) which, viewed in the x/y plane or a plane parallel thereto, are each arranged at a distance from the y/z plane on the same surfaces (8; 10) of the light guide elements (2).

17. Light module (30; 30'; 60; 60'; 70; 70') according to one of claims 9 to 16, **characterized in that** the light module (30; 30'; 60; 60'; 70; 70') comprises four light guide elements (2) according to one of the claims 1 to 10, wherein in each case two light guide elements (2) with mutually facing and mutually spaced in-coupling sections (6) are arranged above the x/y plane and in each case two further light guide elements (2) with mutually facing and mutually spaced in-coupling sections (6) are arranged below the x/y plane, wherein in each case two light guide elements (2) arranged in a common plane form a light guide element pair, wherein the y/z plane extends in the middle between the two in-coupling sections (6) of a light guide element pair and the x/y plane extends between the two light guide element pairs, and that the light module (30; 30'; 60; 60'; 70; 70') comprises four light sources (32) which, viewed in the x/y plane or in a plane parallel thereto, are each arranged at a distance from the y/z plane and of which, viewed in the y/z plane, two are each arranged at a distance from the x/y plane.

18. Light module (30; 30'; 60; 60'; 70; 70') according to claim 17, **characterized in that** the light guide element pairs are each arranged in the light module (30; 30'; 60; 60'; 70; 70') with outwardly directed flat surfaces (8).

19. Light module (30; 30'; 60; 60'; 70; 70') according to one of claims 16 to 18, **characterized in that** the light emitted by the various light sources (32) serves to generate different light distributions.

20. Light module (30; 30'; 60; 60'; 70; 70') according to one of claims 16 to 19, **characterized in that** at least two of the light sources (32) emit light of different colors.

## Revendications

1. Elément guide de lumière (2) en forme de plaque, s'étendant dans un plan, composé d'un matériau transparent destiné à dévier la lumière émise par au moins une source de lumière (32), l'élément guide de lumière (2) comprenant une partie d'injection (6) destinée à injecter la lumière, des surfaces limites extérieures à réflexion totale et une partie d'extraction (12) destinée à extraire la lumière, dans lequel l'élément guide de lumière (2) présente deux surfaces (8, 10) opposées, espacées l'une de l'autre, lesquelles forment au moins en partie les surfaces limites à réflexion totale et dont le contour dans le plan d'étendue de l'élément guide de lumière (2) est défini respectivement d'une part par une partie courbe courbée et d'autre part par une partie sécante, une surface latérale courbée, laquelle relie les surfaces (8, 10) l'une à l'autre le long de leur contour dans la zone de la partie courbe courbée, et une surface latérale plane, laquelle relie les surfaces (8, 10) l'une à l'autre le long de leur contour dans la zone de la partie sécante, dans lequel la partie d'injection (6) est formée par la surface latérale plane et la partie d'extraction (12) par la surface latérale courbée, **caractérisé en ce qu'**au moins une surface réfléchissante (18; 18') au moins en partie inclinée par rapport à la surface latérale plane de l'élément guide de lumière (2), laquelle dévie au moins une partie de la lumière émise par l'au moins une source de lumière (32) à injecter dans l'élément guide de lumière (2) sur la surface latérale plane, est associée à la partie d'injection (6), dans lequel la surface réfléchissante (18; 18') présente une forme qui est obtenue après une rotation d'une courbe de base (14') et un système de référence spatial est défini par trois axes x, y et z respectivement perpendiculaires les uns aux autres, dans lequel une surface (8) de l'élément guide de lumière (2) se situe dans un plan x/y tendu par les axes x et y, dans lequel la surface latérale plane de la partie d'injection (6) de l'élément guide de lumière (2) s'étend le long de l'axe y et un plan x/z divise la surface latérale plane en deux parties de surface de même taille et dans lequel la distance entre les deux surfaces (8, 10) opposées diminue à partir de la partie d'extraction (12) en direction de l'origine du système de référence, et **en ce que** la forme d'une surface réfléchissante (18; 18') est obtenue lorsque, à partir de la courbe de base (14'), qui se situe avec son foyer dans l'origine du système de référence dans le plan x/y, uniquement la partie pour des valeurs x négatives et des valeurs y négatives est amenée en rotation de 90° autour de l'axe y et se rabat en direction de la surface latérale plane de l'élément guide de lumière (2).

2. Elément guide de lumière (2) selon la revendication 1, **caractérisé en ce que** la courbe de base (14') est réalisée sous la forme d'une parabole ou d'une courbe semblable à une parabole.

3. Elément guide de lumière (2) selon la revendication 2, **caractérisé en ce que** la courbe semblable à une parabole est une parabole modifiée par des termes d'ordre supérieur.

4. Elément guide de lumière (2) selon l'une quelconque des revendications 1 à 3, **caractérisé en ce qu'**au moins un élément d'injection (16; 16') fabriqué à partir d'un matériau transparent est associé à la partie d'injection (6), dans lequel la surface réfléchissante (18; 18') est formée par une surface limite à réflexion totale de l'au moins un élément d'injection (16; 16').

5. Elément guide de lumière (2) selon la revendication 4, **caractérisé en ce que** deux éléments d'injection (16; 16') à symétrie spéculaire par rapport au plan x/z sont associés à la partie d'injection (6).

6. Elément guide de lumière (2) selon l'une quelconque des revendications 1 à 5, **caractérisé en ce que** la forme d'une surface (10) de l'élément guide de lumière (2) est obtenue lorsque la courbe de base (14') amenée en rotation autour de l'axe y et rabattue en direction de la surface latérale plane de l'élément guide de lumière est amenée en rotation de 180° autour de l'axe z.

7. Elément guide de lumière (2) selon la revendication 6, **caractérisé en ce que** l'autre surface (8) de l'élément guide de lumière (2), qui est opposée à la première surface (10) de l'élément guide de lumière (2) produite par rotation de la courbe de base (14') rabattue autour de l'axe z, présente une forme plane.

8. Elément guide de lumière (2) selon l'une quelconque des revendications 4 à 7, **caractérisé en ce que** l'au moins un élément d'injection (16; 16') forme une unité intégrale avec l'élément guide de lumière (2) restant et est réalisé d'une seule pièce avec celui-ci.

9. Module lumineux (30; 30'; 60; 60'; 70; 70') pour un dispositif d'éclairage de véhicule à moteur destiné à produire au moins une répartition de lumière prédéfinie, le module lumineux (30; 30'; 60; 60'; 70; 70') comprenant au moins une source de lumière (32) et au moins un élément guide de lumière (2) en forme de plaque destiné à dévier la lumière émise par la source de lumière (32), **caractérisé en ce que** l'au moins un élément guide de lumière (2) est réalisé selon l'une quelconque des revendications 1 à 8.

10. Module lumineux (30; 30'; 60; 60'; 70; 70') selon la revendication 9, **caractérisé en ce que** le module lumineux (30; 30'; 60; 60'; 70; 70') comprend en outre un élément réfléchissant (34; 34'; 34"; 40; 40') associé à la partie d'extraction (12) de l'élément guide de lumière (2), lequel dévie au moins une partie de la lumière extraite pour produire au moins une répartition de lumière souhaitée du module lumineux (30; 30'; 60; 60'; 70; 70').

11. Module lumineux (30; 30'; 60; 60'; 70; 70') selon la revendication 10, **caractérisé en ce que** l'élément réfléchissant est réalisé sous la forme d'un réflecteur miroitant (34; 34', 34") ou sous la forme d'un corps réfléchissant (40; 40') composé d'un matériau transparent.

12. Module lumineux (30; 30'; 60; 60'; 70; 70') selon la revendication 10 ou 11, **caractérisé en ce qu'**une surface réfléchissante (34; 34', 34"; 54) de l'élément réfléchissant (34; 34'; 34"; 40; 40') s'étend à une certaine distance, de préférence à une distance constante, par rapport à la surface latérale courbée de la partie d'extraction (12) de l'élément guide de lumière (2) .

13. Module lumineux (30; 30'; 60; 60'; 70; 70') selon l'une quelconque des revendications 9 à 12, **caractérisé en ce qu'**une direction d'émission principale de l'au moins une source de lumière (32) s'étend parallèlement à la surface latérale plane de la partie d'injection (6).

14. Module lumineux (30; 30'; 60; 60'; 70; 70') selon la revendication 12 ou 13, **caractérisé en ce que** la surface réfléchissante (18; 18') inclinée associée à la partie d'injection (6) de l'élément guide de lumière (2) présente sur une face une distance par rapport à la surface latérale plane de la partie d'injection (6) plus grande que sur une autre face et **en ce que** l'au moins une source de lumière (32) est disposée sur la face de l'élément guide de lumière (2) sur laquelle la surface réfléchissante (18; 18') présente la distance plus grande par rapport à la surface latérale plane.

15. Module lumineux (30; 30'; 60; 60'; 70; 70') selon l'une quelconque des revendications 9 à 14, **caractérisé en ce que** l'au moins une source de lumière (32) présente au moins une source de lumière à semi-conducteur, en particulier au moins une diode électroluminescente.

16. Module lumineux (30; 30'; 60; 60'; 70; 70') selon l'une quelconque des revendications 9 à 15, **caractérisé en ce que** le module lumineux (30; 30'; 60; 60'; 70; 70') présente deux éléments guide de lumière (2) selon l'une quelconque des revendications 1 à 10, qui sont disposés dans le plan x/y avec des parties d'injection (6) tournées les unes vers les autres et espacées les unes des autres, dans lequel le plan x/y se situe au centre entre les deux parties d'injection (6), et **en ce que** le module lumineux (30; 30'; 60; 60'; 70; 70') présente deux sources de lumière (32), qui, observées dans le plan x/y ou un plan parallèle à celui-ci, sont disposées respectivement à une certaine distance du plan y/z sur les mêmes surfaces (8; 10) des éléments guide de lumière (2) .

17. Module lumineux (30; 30'; 60; 60'; 70; 70') selon l'une quelconque des revendications 9 à 16, **caractérisé en ce que** le module lumineux (30; 30'; 60; 60'; 70; 70') présente quatre éléments guides de lumière (2) selon l'une quelconque des revendications 1 à 10, dans lequel respectivement deux éléments guides de lumière (2) sont disposés avec des parties d'injection (6) tournées les unes vers les autres et espacées les unes des autres au-dessus du plan x/y et respectivement deux autres éléments guides de lumière (2) avec des parties d'injection (6) tournées les unes vers les autres et espacées les unes des autres au-dessous du plan y/z, dans lequel respectivement deux éléments guides de lumière (2) disposés dans un plan commun forment une paire d'élément guides de lumière, dans lequel le plan x/y s'étend au centre entre les deux parties d'injection (6) d'une paire d'éléments guides de lumière et le plan x/y entre les deux paires d'éléments guides de lumière, et **en ce que** le module lumineux (30; 30'; 60; 60'; 70; 70') présente quatre sources de lumière (32), qui, observées dans le plan x/y ou un plan parallèle à celui-ci, sont disposées respectivement à une certaine distance du plan y/z et dont respectivement deux, observées dans le plan y/z, sont disposées à une certaine distance du plan x/y.

18. Module lumineux (30; 30'; 60; 60'; 70; 70') selon la revendication 17, **caractérisé en ce que** les paires d'éléments guides de lumière sont disposées dans le module lumineux (30; 30'; 60; 60'; 70; 70') respectivement avec les surfaces planes (8) dirigées vers l'extérieur.

19. Module lumineux (30; 30'; 60; 60'; 70; 70') selon l'une quelconque des revendications 16 à 18, **caractérisé en ce que** la lumière émise par les différentes sources de lumière (32) sert à produire différentes répartitions de lumière.

20. Module lumineux (30; 30'; 60; 60'; 70; 70') selon l'une quelconque des revendications 16 à 19, **caractérisé en ce qu'**au moins deux des sources de lumière (32) émettent de la lumière de couleurs différentes.
